# EUROPEAN PATENT SPECIFICATION

(11) **EP 2 469 383 B1**
(45) Date of publication and mention of the grant of the patent: **11.09.2019**
(21) Application number: 11194204.1
(22) Date of filing: 19.12.2011
(51) Int. Cl.: G06F 3/0354, G06F 3/046, G06F 3/038, G06F 3/041, G06F 3/044, G06F 1/16, G06F 3/0488

(54) **Input apparatus with display integrating a sensor that defines a pointing detection area**
Eingabevorrichtung mit einem Bildschirm mit integriertem Sensor als Positionserkennungsregion
Appareil d'entrée avec écran intégrant un capteur qui définit une zone de détection de pointage

(30) Priority: 24.12.2010 JP 2010287029
(43) Date of publication of application: 27.06.2012
(73) Proprietor: Wacom Co., Ltd., Saitama, 349-1148 (JP)
(72) Inventor: Onoda, Naoto, Tokyo 164-0012 (JP)
(74) Representative: Appelt, Christian W.

(56) References cited:
- CN-A- 101 833 873
- JP-A- 2006 260 366
- US-A1- 2009 267 905
- US-A1- 2010 214 259
- US-A1- 2010 222 110

## Description

### BACKGROUND

### Technical Field

The present invention relates to an input apparatus having a display screen and a function of receiving a pointing input inputted by a pointing body, such as a finger or a touch pen, through the display screen.

### Description of the Related Art

Input apparatuses have been in popular use, which have a position detecting function of receiving, through a display screen, an input made by a pointing body, such as a user's finger or a touch pen, in association with a display image shown on the display screen. Each of such input apparatuses is configured by arranging, on a display element thereof, such as a liquid crystal display for example, a position detecting apparatus for detecting an area overlapping a full display area of the display screen of the display element. Position detecting methods for use in position detecting apparatuses having the position pointing body include a resistance film method, an electromagnetic induction method, a capacitive coupling method, and others.

For example, Japanese Patent Laid-open No. 2004-212973 (referred to as Patent Document 1 hereinafter) discloses an input apparatus configured to have a touch panel based on electromagnetic induction as the display screen of a liquid crystal display. With the touch panel disclosed in Patent Document 1, the full display area of the display screen on the liquid crystal display is arranged as a detection area in which a position pointing body is detectable, and the position pointing body is provided in the form of a so-called touch pen. A touch pen used in an electromagnetic induction method is disclosed in Japanese Patent Laid-open No. 2010-117943 (referred to as Patent Document 2 hereinafter), for example.

CN 101 833 873 A describes an electronic device that includes a transparent touch pad, a switch module, a CPU, a touch control module, and a display control module. The switch module is configured to enable or disable the touch pad in response to user operations, and generate an operation signal. The operation signal is an enabling signal or a disabling signal. The CPU generates a control signal and a display signal upon receiving the enabling signal or the disabling signal from the switch module. The touch control module enables or disables the touch pad corresponding to the control signal, and the display control module controls to divide a display area into a first display area and a second display area and to display content only for viewing in a non-operable interface in the first display area.

JP 2006 260366 A describes a display device constituted to use a display region in a part of display regions on a display panel as a tablet input region. This display device is provided with the display panel having a display region of image on a surface and using a region in a part of the display regions as an input region and an electromagnetic induction tablet arranged in a part corresponding to the input region on a rear surface side of the display panel.

US 2009/267905 A1 relates to a device comprising two digitisers for differentiating pen input from touch input, wherein the pen input has priority over the touch input.

US 2010/222110 A1 relates to a device onto which multiple sub-devices such as touch pads can be coupled in order to increase the overall functionality.

### BRIEF SUMMARY

The present invention is defined by the appended claims. All parts which are not part of the appended claims are not part of the present invention.

### BRIEF DESCRIPTION OF THE SEVERAL VIEWS OF THE DRAWINGS

FIG. 1 is a schematic diagram illustrating an exemplary entire external view of an input apparatus practiced as a first embodiment of the invention;
FIG. 2 is an exploded perspective view illustrating a display element and a partial screen sensor in the input apparatus of the first embodiment;
FIG. 3 is an exemplary exploded perspective view illustrating an input apparatus assembled with a full screen sensor, for comparison with the display element and the partial screen sensor of the input apparatus of the first embodiment;
FIG. 4 is a schematic diagram illustrating an exemplary configuration of a signal processing block for the partial screen sensor of the input apparatus of the first embodiment;
FIG. 5 is a flowchart indicative of a detecting operation of a position pointing device in the partial screen sensor in the input apparatus of the first embodiment;
FIG. 6 is a block diagram illustrating an exemplary circuit configuration of the input apparatus of the first embodiment;
FIG. 7 is a diagram for describing one example of an application that uses a pointing input in the input apparatus of the first embodiment;
FIG. 8 is a flowchart indicative of an exemplary processing operation of the main section of the input apparatus of the first embodiment;
FIG. 9 is a flowchart indicative of another exemplary processing operation of the main section of the input apparatus of the first embodiment;
FIG. 10 is an exploded perspective view illustrating another example of the input apparatus of the first embodiment;
FIG. 11 is an exploded perspective view illustrating an exemplary configuration of the main section of an input apparatus practiced as a second embodiment of the invention;
FIGS. 12A and 12B are top views illustrating the exemplary configuration of the main section of the input apparatus of the second embodiment;
FIG. 13 is an exploded perspective view illustrating a display element and a partial screen sensor in an input apparatus practiced as a third embodiment of the invention;
FIG. 14 is a block diagram illustrating an exemplary circuit configuration of the input apparatus of the third embodiment;
FIG. 15 is a part of a flowchart indicative of an exemplary processing operation of the main section of the input apparatus of the third embodiment;
FIG. 16 is another part of the flowchart indicative of an exemplary processing operation of the main section of the input apparatus of the third embodiment;
FIG. 17 is a top view illustrating an exemplary total external view of an input apparatus practiced as a fourth embodiment of the invention;
FIG. 18 is an exploded perspective view illustrating a display element and a partial screen sensor in the input apparatus of the fourth embodiment;
FIG. 19 is a block diagram illustrating an exemplary circuit configuration of the input apparatus of the fourth embodiment;
FIG. 20 is a schematic diagram illustrating an exemplary configuration of a signal processing block for a partial screen sensor unit for use in the input apparatus of the fourth embodiment;
FIG. 21 is a schematic diagram illustrating an exemplary configuration of a power transmission block for the partial screen sensor unit for use in the input apparatus of the fourth embodiment;
FIG. 22 is a schematic diagram illustrating an example of an application to be executed in the input apparatus of the fourth embodiment;
FIG. 23 is a schematic diagram illustrating another example of an application to be executed in the input apparatus of the fourth embodiment; and
FIG. 24 is a flowchart indicative of an exemplary processing operation of the main section of the input apparatus of the fourth embodiment.

### DETAILED DESCRIPTION

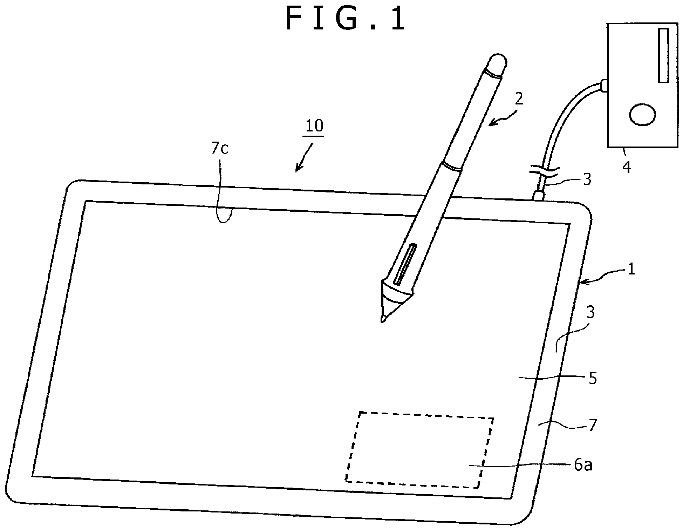

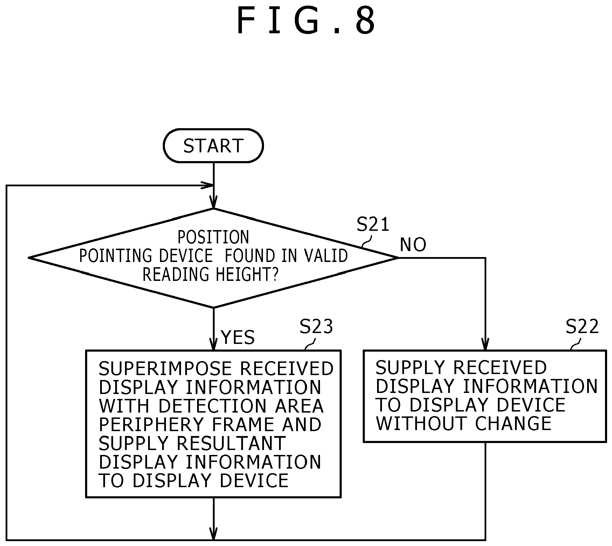

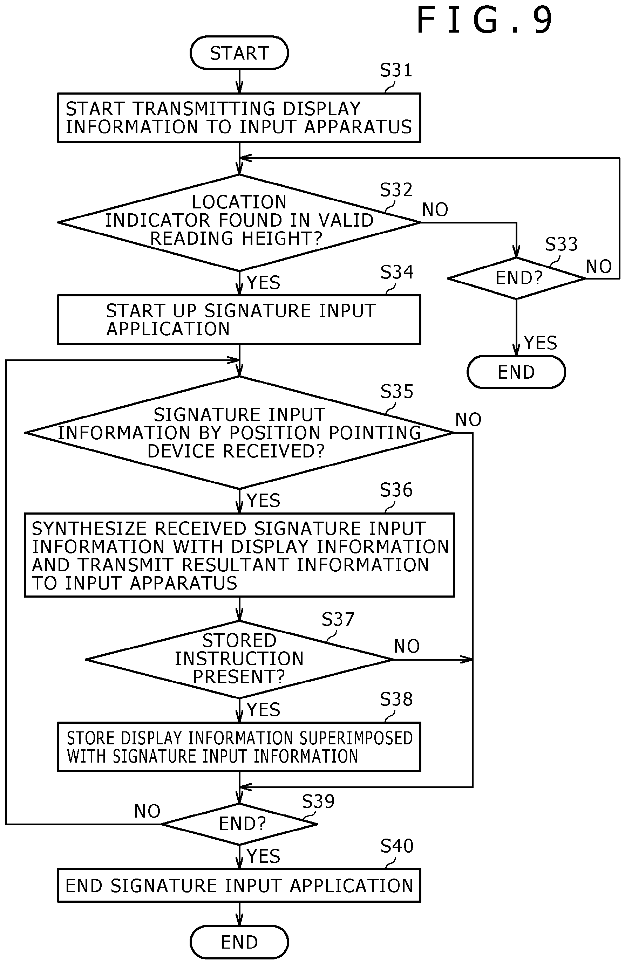

### First embodiment; FIGS. 1 through 10

The invention will be described in further detail by way of embodiments thereof with reference to the accompanying drawings. The following describes an input apparatus practiced as the first embodiment of the invention with reference to FIGS. 1 through 10.

### A total exemplary configuration of the input apparatus

Referring to FIG. 1, there is shown an exemplary external view of an input apparatus 10 practiced as the first embodiment of the invention. As shown in FIG. 1, the input apparatus 10 is made up of an input apparatus main body 1 that is flat and rectangular, and a position pointing device 2 configured to input a pointing input into a sensor block, which provides position detecting means of the input apparatus main body 1.

The input apparatus main body 1 is connected to an external apparatus, such as a personal computer (hereafter referred to also as a PC) 4, via a cable 3. To be more specific, in the first embodiment, the input apparatus 10 is used as an input apparatus of the PC 4. It should be noted that the external apparatus is not limited to the PC 4; for example, a PDA (Personal Digital Assistant) may also be used as the external apparatus. It is also practicable to connect the external apparatus to the input apparatus 10, not by the cable 3, but wirelessly.

The input apparatus main body 1 has a display element having a display screen 5. As will be described later, the display element is made up of a liquid crystal display in this example. As indicated by dashed lines in FIG. 1, the input apparatus main body 1 incorporates a position detecting sensor (hereafter referred to as a partial screen sensor), with a part of the full display area of the display screen 5 used as a position detecting area 6a. In the first embodiment, the partial screen sensor based on electromagnetic induction is mounted on the rear side of the display element as seen from the direction in which the display screen 5 is viewed.

A housing 7 of the input apparatus main body 1 is a hollow and flat cube. The input apparatus main body 1 has the display element and the partial screen sensor in the housing 7. The housing 7 is made up of an upper housing 7a and a bottom housing, not shown, that is fit with the upper housing 7a. The upper housing 7a has an opening 7c through which the display screen 5 of the display element is exposed to the outside.

The position detecting area 6a of the partial screen sensor is an area that overlaps with a partial area of the display screen 5 as described above. The partial screen sensor is arranged on the rear side of the display element; but because the partial screen sensor is based on electromagnetic induction, an operation input can be executed by the position pointing device 2 from the side of the display screen 5. Therefore, in an area corresponding to the position detecting area 6a of the display screen 5, text and the like can be inputted by a user by executing a pointing operation with the position pointing device 2.

In the first embodiment, the position pointing device 2 is a position pointing device described in Patent Document 2 mentioned above, for example. The position pointing device 2 indicates a position for a partial screen sensor on the basis of electromagnetic induction and has a resonance circuit that resonates with an electromagnetic wave of a particular frequency transmitted from the partial screen sensor. The position pointing device 2 transmits a resonance signal detected by the resonance circuit to the partial screen sensor, thereby indicating a position to the partial screen sensor.

The position pointing device 2 of the first embodiment is implemented by a touch pen as shown, which can detect writing pressures. To be more specific, the resonance circuit of the position pointing device 2 is made up of a position detecting coil and a capacitor. The capacitor is a variable capacitor that can vary the capacitance in accordance with writing pressures. The configuration of the position pointing device 2 is detailed in Patent Document 2 mentioned above and, therefore, a further description of this configuration is omitted.

### Exemplary configurations of the display element and the partial screen sensor

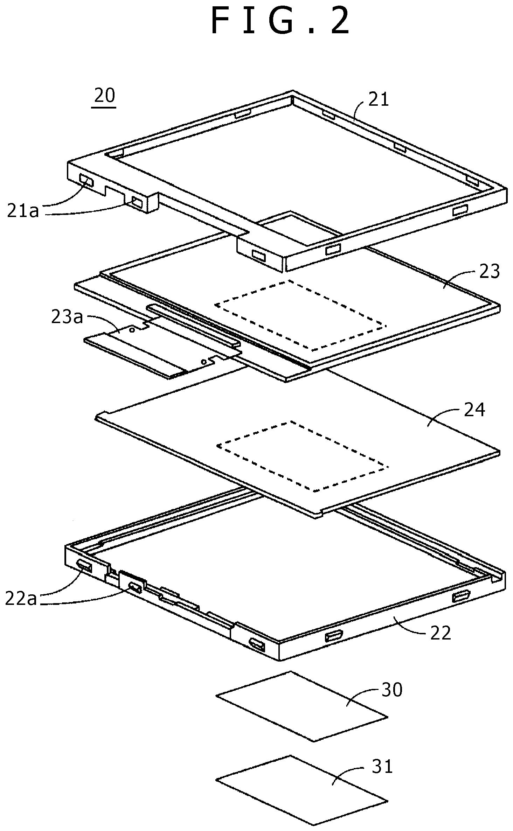

The following describes exemplary configurations of the display element and the partial screen sensor that are accommodated in the housing 7 of the input apparatus 10. Referring to FIG. 2, there is shown an exploded perspective view illustrating the display element and the partial screen sensor in this example.

In this example, the display element is unitized. A display element unit 20 in this example is made up of an upper metal frame 21 arranged toward the side of the display screen 5, a lower metal frame 22 arranged at the opposite side of the upper metal frame 21, a liquid crystal display element 23 arranged between both the frames 21 and 22, and a backlight 24.

The upper metal frame 21 is formed into a square frame having an opening approximately the same in size as the display screen 5. The lower metal frame 22 is also formed into a square frame having an opening similar to that of the upper metal frame 21. When the upper metal frame 21 is fit with the lower metal frame 22 for assembly, a space is created between the two.

Then, the liquid crystal display element 23 is placed toward the side of the upper metal frame 21 and the backlight 24 is placed toward the side of the lower metal frame 22. The upper metal frame 21 and the lower metal frame 22 are fitted to each other in the state that the assembly of the liquid crystal display element 23 and the backlight 24 is accommodated in the above-mentioned space created between the upper metal frame 21 and the lower metal frame 22. As shown in FIG. 2, the upper metal frame 21 is provided with an opening 21a for the fitting. At the position of the lower metal frame 22 corresponding to the opening 21a, a projection 22a to be fitted into the opening 21a is arranged.

It should be noted that a lead block 23a made up of a flexible board is connected to the liquid crystal display element 23. The lead block 23a is led out to the outside from an opening groove arranged between the upper metal frame 21 and the lower metal frame 22 that are fitted to each other.

### Explanation of an exemplary input apparatus assembled with a full screen sensor

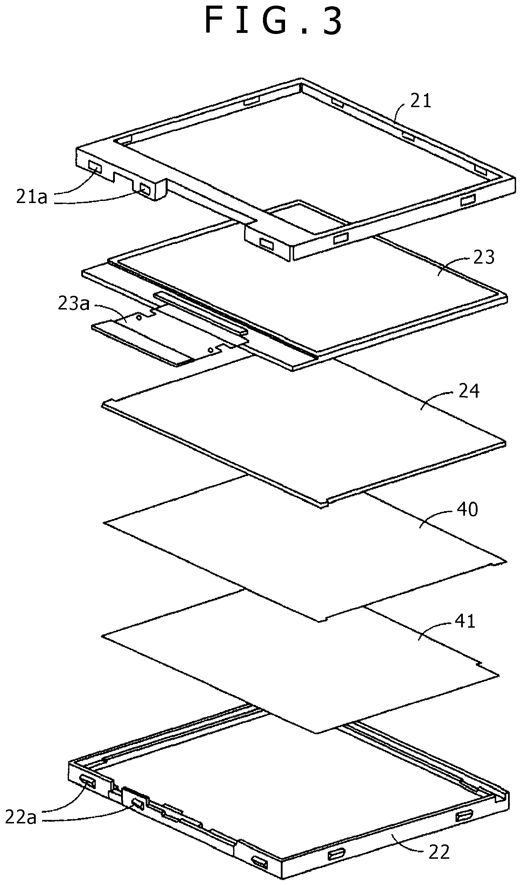

If a full screen sensor based on electromagnetic induction, having an area equal in size to the display screen 5 as a detection area, is to be installed on the display element unit 20 described above, the display element unit 20 must be disassembled for reconfiguration. To be more specific, the display element unit 20 has a configuration in which the liquid crystal display element 23 and the backlight 24 are sandwiched between the upper metal frame 21 and the lower metal frame 22 as described above. Hence, if a full screen sensor based on electromagnetic induction is to be mounted on the rear side of the display element unit without any modification, the upper metal frame 21 and the lower metal frame 22 will interfere with the signal transfer between the position pointing device and the full screen sensor. In order to minimize such interference, the full screen sensor must be reconfigured by modifying the display element unit 20 as shown in FIG. 3.

Referring to FIG. 3, there is shown an exploded perspective view illustrating an exemplary configuration of the main section of an input apparatus in which a full screen sensor 40 based on electromagnetic induction is assembled.

To be more specific, the upper metal frame 21 of the display element unit 20 and the lower metal frame 22 are detached from each other. Next, the full screen sensor 40 is arranged on the rear side of the backlight 24, the full screen sensor having a detection area equal in size to the display screen 5. In addition, on the rear side of the full screen sensor 40, a shield plate 41 is arranged for minimizing the influence of the upper metal frame 21 and the lower metal frame 22 on the signal transfer between the full screen sensor 40 and the position pointing device 2. It should be noted that a shield sheet may be used instead of the shield plate 41.

Next, an assembly in which the liquid crystal display element 23, the backlight 24, the full screen sensor 40, and the shield plate 41 are stacked in this order from top to bottom is accommodated into the above-mentioned space formed between the upper metal frame 21 and the lower metal frame 22, and the upper metal frame 21 is fitted into the lower metal frame 22 in a fixed manner.

As described above, in order to install the full screen sensor 40 having the detection area equal in size to the display screen 5 onto the display element unit 20, the display element unit 20 must be modified, thereby increasing the production cost. In addition, the display element unit 20 must be disassembled, which may hurt the stability of quality, which may in turn deteriorate mass productivity and supply capacity.

### Comparison between the example shown in FIG. 3 and the first embodiment

By contrast, as described above and as shown in FIG. 2, a partial screen sensor 30 based on electromagnetic induction of the first embodiment is a small-size sensor having a detection area that is a partial display area (the areas enclosed by dashed lines in the liquid crystal display element 23 and the backlight 24 shown in FIG. 2) in the display screen 5.

In this example, the lower metal frame 22 has an opening approximately the same in size as the display screen. Therefore, the first embodiment allows the arrangement of the partial screen sensor 30 at any position of the above-mentioned opening free from the influence of the upper metal frame 21 and the lower metal frame 22. The areas indicated by dashed lines in the liquid crystal display element 23 and the backlight 24 shown in FIG. 2 are partial areas inside the opening area of the lower metal frame 22.

As seen from the above description, in the first embodiment, the display element unit 20 is left unmodified and the partial screen sensor 30 is directly arranged on the rear side of the backlight 24 in the opening of the lower metal frame 22. Then, the rear side of the partial screen sensor 30 is covered with the shield plate 31. It should be noted that a shield sheet may be used instead of the shield plate 31.

As described above, in the first embodiment, a partial screen sensor based on electromagnetic induction that is smaller in size than the display screen is arranged in any position within a range free from the influence of metal component parts. Consequently, according to the first embodiment, the partial screen sensor 30 can be installed on the display element unit 20 for use without modifying the display element unit 20. Because the display element unit 20 need not be modified, the modification cost of the unit does not occur and, at the same time, the stability in quality and mass-productivity of the input apparatus are enhanced.

In addition, according to the first embodiment, the partial screen sensor 30 has a detection area smaller than the full display area of the display screen 5, thereby avoiding creation of wasted areas.

### Exemplary configuration of the partial screen sensor 30 and an example of a signal processing block

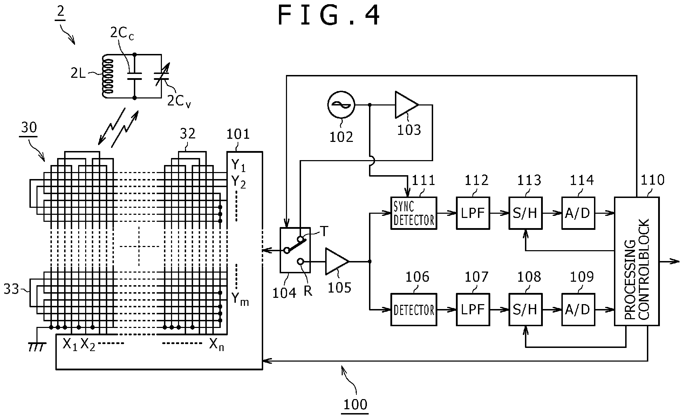

Although not shown in FIG. 2, a signal processing block 100 for position detection is provided for the partial screen sensor 30. Referring to FIG. 4, there is shown an exemplary configuration of the partial screen sensor 30 and an exemplary configuration of the signal processing block 100.

It should be noted that, as shown in FIG. 4, the position pointing device 2 is realized by a resonance circuit made up of a position pointing coil 2L and a resonance capacitor 2Co and a variable capacitor 2Cv that are connected to the position pointing coil 2L in parallel.

On the other hand, the partial screen sensor 30 has an X-axis direction loop coil group 32 and a Y-axis direction loop coil group 33 laminated together. The X-axis direction loop coil group 32 and the Y-axis direction loop coil group 33 are each made up of two or more rectangular loop coils. The loop coils forming the X-axis direction loop coil group 32 are arranged as sequentially overlapping on each other in an equidistant manner in the horizontal direction (or the X-axis direction) of the rectangular partial screen sensor 30. The loop coils forming the Y-axis direction loop coil group 33 are arranged as sequentially overlapping on each other in an equidistant manner in the vertical direction (or the Y-axis direction) of the partial screen sensor 30.

The signal processing block 100 provided for the partial screen sensor 30 includes a selector circuit 101, to which the X-axis direction loop coil group 32 and the Y-axis direction loop coil group 33 are connected. The selection circuit 101 sequentially selects one loop coil of two loop coil groups 32 and 33.

Further, the signal processing block 100 has an oscillator 102, an electric current driver 103, a switching connection circuit 104, a reception amplifier 105, a detector 106, a lowpass filter 107, a sample hold circuit 108, an A/D (Analog to Digital) conversion circuit 109, a sync detector 111, a lowpass filter 112, a sample hold circuit 113, an A/D conversion circuit 114, and a processing control block 110.

The oscillator 102 generates an alternate current signal having frequency f0. The oscillator 102 supplies the generated alternate current signal to the electric current driver 103 and the sync detector 111. The electric current driver 103 converts the alternate current signal supplied from the oscillator 102 into a current and supplies the current to the switching connection circuit 104. Under the control of the processing control block 110, the switching connection circuit 104 switches between the connection destinations (a transmission-side terminal T and a reception-side terminal R), to which a loop coil selected by the selection circuit 101 is connected. The electric current driver 103 is connected to the transmission-side terminal T and the reception amplifier 105 is connected to the reception-side terminal R.

An inductive voltage generated on the loop coil selected by the selection circuit 101 is supplied to the reception amplifier 105 via the selection circuit 101 and the switching connection circuit 104. The reception amplifier 105 amplifies the inductive voltage supplied from the loop coil and transmits the amplified inductive voltage to the detector 106 and the sync detector 111.

The detector 106 detects the inductive voltage generated on the loop coil, namely, a reception signal, and transmits the detected reception signal to the lowpass filter 107. The lowpass filter 107 has a cutoff frequency sufficiently lower than frequency f0 described above and converts an output signal from the detector 106 into a direct current signal, thereby transmitting the direct current signal to the sample hold circuit 108. The sample hold circuit 108 holds a voltage value at a predetermined timing of the output signal of the lowpass filter 107, to be more specific, at a predetermined timing during the reception period, and transmits the voltage value to the A/D conversion circuit 109. The A/D conversion circuit 109 converts the analog output of the sample hold circuit 108 into a digital signal and outputs the digital signal to the processing control block 110.

On the other hand, the sync detector 111 synchronously detects the output signal of the reception amplifier 105 with the alternate current signal from the oscillator 102. Then, the sync detector 111 transmits a signal having a level corresponding to a phase difference between the output signal of the reception amplifier 105 and the alternate current signal from the oscillator 102 to the lowpass filter 112. The lowpass filter 112 has a cutoff frequency sufficiently lower than frequency f0 and converts the output signal of the sync detector 111 into a direct current signal, thereby transmitting the direct current signal to the sample hold circuit 113. The sample hold circuit 113 holds a voltage value at a predetermined timing of the output signal of the lowpass filter 112 and transmits the voltage value to the A/D conversion circuit 114. The A/D conversion circuit 114 converts the analog output of the sample hold circuit 113 into a digital signal and outputs the digital signal to the processing control block 110.

The processing control block 110 is formed by a microcomputer and has functions of controlling component blocks of the signal processing block 100 for position detection. To be more specific, the processing control block 110 controls the selection of a loop coil by the selection circuit 101, the switching by the switching connection circuit 104, and the timings of the sample hold circuit 108 and the sample hold circuit 113. In addition, on the basis of the input signals from the A/D conversion circuit 109 and the A/D conversion circuit 114, the processing control block 110 causes the X-axis direction loop coil group 32 and the Y-axis direction loop coil group 33 to transmit electromagnetic waves in a constant continuous transmission time period.

An inductive voltage is caused by an electromagnetic wave transmitted from the position pointing device 2 on each loop coil of the X-axis direction loop coil group 32 and the Y-axis direction loop coil group 33. On the basis of the level of the voltage value of the inductive voltage caused on each loop coil, the processing control block 110 computes coordinate values of a pointing position in the X-axis direction and the Y-axis direction in the detection area of the partial screen sensor 30. In addition, on the basis of a phase difference between the transmitted electromagnetic wave and the received electromagnetic wave, the processing control block 110 detects a writing pressure.

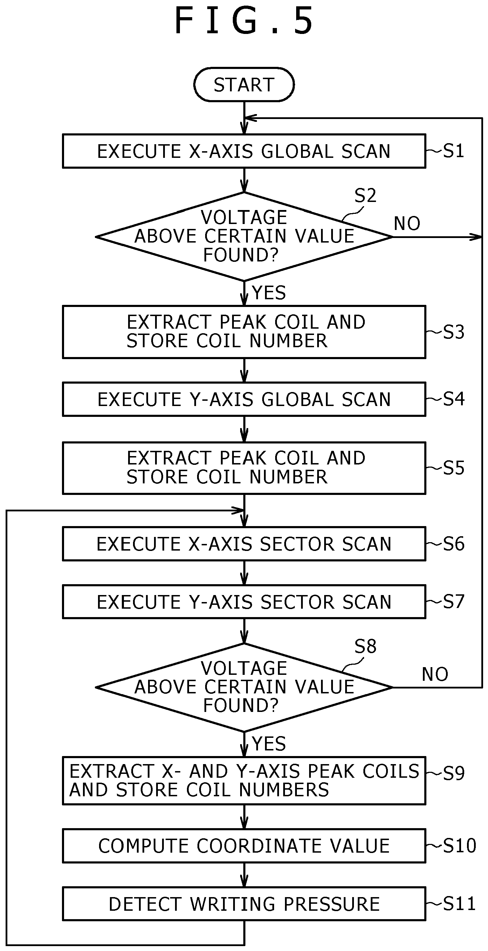

The following describes operations of position detection and writing pressure detection to be executed with the processing by the signal processing block 100 with reference to FIG. 5. Referring to FIG. 5, there is shown a flowchart indicative of the processing to be executed by the processing control block 110.

First, the processing control block 110 sequentially selectively scans the loop coils of the X-axis direction loop coil group 32 (this is called a global scan) (step S1).

The processing control block 110 transmits a signal for selecting the transmission-side terminal T to the switching connection circuit 104 for a predetermined time period. Next, when the predetermined time period has elapsed, while the transmission-side terminal T is selected by the switching connection circuit 104, the processing control block 110 transmits a signal for selecting the reception-side terminal R to the switching connection circuit 104, thereby canceling an electromagnetic wave generated from a loop coil X₁.

When the electromagnetic wave generated from the loop coil X₁ has been cancelled, an inductive voltage generated in on the position pointing coil 2L, the resonance capacitor 2Co, and the variable capacitor 2Cv of the resonance circuit of the position pointing device 2 gradually attenuates in accordance with the loss, upon which the resonance circuit of the position pointing device 2 generates an electromagnetic wave of frequency f0. The electromagnetic wave in turn resonates with the above-mentioned loop coil X₁ in reverse, thereby causing the loop coil X₁ to generate an inductive voltage.

Then, when the above-mentioned predetermined time period has elapsed, while the reception-side terminal R is selected by the switching connection circuit 104, the processing control block 110 transmits information for selecting the second loop coil in the X-axis direction loop coil group 32, a loop coil X₂ for example, to the selection circuit 101. In addition, the processing control block 110 transmits a signal for selecting the transmission-side terminal T to the switching connection circuit 104.

During the above-mentioned reception period, the inductive voltage caused in a loop coil of the X-axis direction loop coil group 32, namely, a reception signal, is converted into a direct current signal through the detector 106 and the direct current signal is smoothed by the lowpass filter 107. Next, the smoothed signal is held by the sample hold circuit 108 at a predetermined timing to be transmitted to the processing control block 110 as a voltage value via the A/D conversion circuit 109.

It should be noted that an output level of the sample hold circuit 108 takes a value dependent on the distance between the position pointing device 2 and the loop coil. Hence, the processing control block 110 determines whether the maximum value of the output level of the sample hold circuit 108 is equal to or higher than a predetermined certain value (step S2), thereby determining whether the position pointing device 2 is located within a valid reading height in the partial screen sensor 30.

If the maximum value of the output level of the sample hold circuit 108 is found not to be equal to or higher than the certain value in step S2, namely, the position pointing device 2 is found not to be located within the valid reading height, then the processing control block 110 returns the procedure to step S1.

On the other hand, if the position pointing device 2 is found to be within the valid reading height in step S2, then the processing control block 110 extracts a loop coil (hereafter referred to as a peak coil) on which the maximum value has been obtained among the loop coils X₁ through Xₙ and stores the number of the extracted peak coil (step S3).

Next, the processing control block 110 sequentially selectively scans the loop coils of the Y-axis direction loop coil group 33 (namely, a global scan) (step S4), thereby executing the transmission and reception of electromagnetic waves in the loop coils of the Y-axis direction loop coil group 33. Then, the same processing operation as above is executed on the loop coils Y₁ through Yₘ (step S5).

Next, around the peak coil of the X-axis direction loop coil group 32, the processing control block 110 executes the transmission and reception of electromagnetic waves for the predetermined number of loop coils adjacent to the peak coil, for example five loop coils (this is called a sector scan) (step S6).

After the X-axis sector scan operation, the processing control block 110 executes the same sector scan on the Y-axis direction loop coil group 33 (step S7).

When the Y-axis sector scan operation has been completed, the processing control block 110 determines whether the maximum value of the inductive voltage obtained in step S6 and step S7 is equal to or higher than a certain value (step S8), thereby determining whether the position pointing device 2 is within the valid reading height of the partial screen sensor 30.

If the maximum value of the output level of the sample hold circuit 108 is found to be not equal to or higher than a certain value in step S8, namely, if the position pointing device 2 is found not within the valid reading height, then the processing control block 110 returns the procedure to step S1.

On the other hand, if the position pointing device 2 is found to be within the valid reading height in step S8, then the processing control block 110 extracts a peak coil in the X-axis direction and a peak coil in the Y-axis direction, on which the maximum inductive voltage has been obtained, and stores the numbers of these peak coils (step S9).

Next, processing control block 110 extracts two or more inductive voltages in the descending order of the levels for the sector scans in the X-axis direction and the Y-axis direction, for example three inductive voltages, and obtains the coordinate values of the X-axis direction and the Y-axis direction of a position pointed to by the position pointing device 2 based on these signals (step S10). The coordinate values of the X-axis direction and the Y-axis direction can be obtained by executing a known coordinate computation method, such as described in Japanese Patent No. 2131145 commonly assigned to the present applicant.

Next, the processing control block 110 detects a writing pressure from a signal level in accordance with a phase difference between the transmitted and received electromagnetic waves (step S11). Subsequently, as long as the position pointing device 2 remains within the valid reading height, the processing control block 110 repeats the processing operations of steps S6 through S11 and, if the position pointing device 2 is found not to be within the valid reading height, returns the procedure to step S1.

As described above, in the partial screen sensor 30, the position of the position pointing device 2 in the proximity can be detected by the processing control block 110. Moreover, detecting the phase of a received signal allows access to the information about a writing pressure of the position pointing device 2.

### Exemplary internal configuration of the input apparatus 10

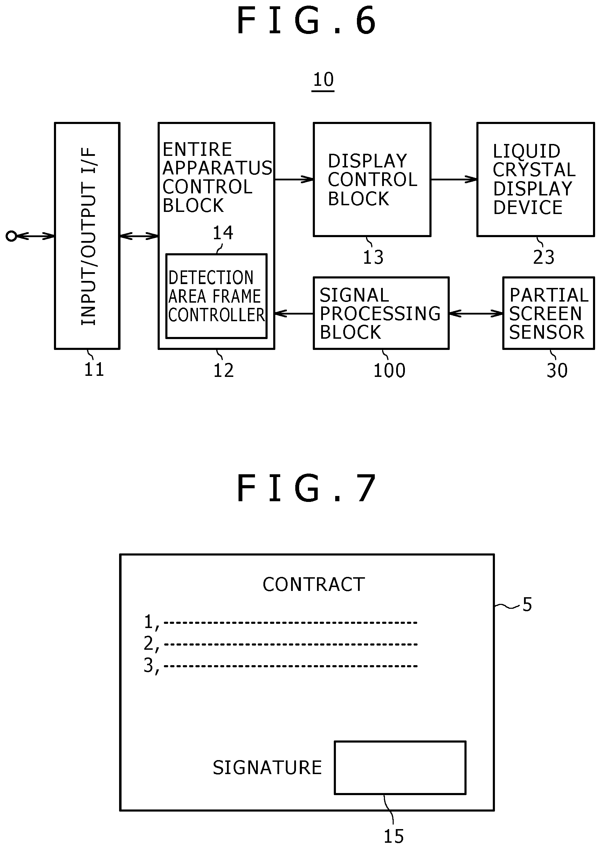

The following describes an exemplary internal configuration of the input apparatus 10 practiced as the first embodiment of the invention. Referring to FIG. 6, there is shown a block diagram illustrating an exemplary configuration of internal circuits of the input apparatus 10. The input apparatus 10 internally has an input/output interface 11, an entire apparatus control block 12, a display control block 13, the above-mentioned liquid crystal display element 23 of the display element unit 20 to which the partial screen sensor 30 is attached, the above-mentioned partial screen sensor 30, and the above-mentioned signal processing block 100 connected to the partial screen sensor 30.

The input/output interface 11 provides interfacing of signals between the input apparatus 10 and the PC 4. The input/output interface 11 receives information mainly made up of display information from the PC 4 and transmits the received information to the entire apparatus control block 12.

The entire apparatus control block 12 is based on a microcomputer, for example, and generates display information from the received information to transmit the generated display information to the display control block 13. The display control block 13 supplies the received display information to the liquid crystal display element 23, thereby controlling the liquid crystal display element 23 so as to display on the display screen 5 a display image based on the display information.

As described above, the signal processing block 100 detects the pointing input of the position pointing device 2 to the partial screen sensor 30 and generates pointing input detection information. Next, the signal processing block 100 supplies the generated pointing input detection information of the position pointing device 2 to the entire apparatus control block 12. The entire apparatus control block 12 transmits the pointing input detection information received from the signal processing block 100 to the PC 4 via the input/output interface 11.

Receiving the pointing input detection information from the input apparatus 10, the PC 4 generates display information based on the received pointing input detection information of the position pointing device 2 and synthesizes the generated display information with the display information to be transmitted to the input apparatus 10 for inputting a document, for example. For example, if the information inputted by the position pointing device 2 is text information, then the PC 4 synthesizes the inputted characters with the display information to be transmitted to the input apparatus 10. Therefore, for example, the characters in accordance with the pointing input detection information of the position pointing device 2 are displayed in the display screen 5 of the liquid crystal display element 23 of the input apparatus 10.

In addition, in the first embodiment, the signal processing block 100 is monitoring if the position pointing device 2 has inputted within the valid reading height of the partial screen sensor 30. The obtained monitoring output is also supplied to the entire apparatus control block 12 as part of the pointing input detection information.

When the position pointing device 2 is found having inputted within the valid reading height on the basis of the supplied pointing input detection information, the entire apparatus control block 12 starts up a detection area frame controller 14 thereof to superimpose the frame information indicative of the detection area of the partial screen sensor 30 onto the display information supplied from the input/output interface 11. The detection area frame controller 14 has generated beforehand the frame information indicative of the detection area of the partial screen sensor 30 and holds the generated frame information in a storage block of the detection area frame controller 14. When started up, the detection area frame controller 14 outputs the frame information in the display area corresponding to the display screen 5 to superimpose the outputted frame information onto the display information supplied from the input/output interface 11. It should be noted that the function of the detection area frame controller 14 can be realized by a software processing function of the entire apparatus control block 12.

As seen from the description above, a periphery frame 15 of the detection area of the partial screen sensor 30 is displayed on the display screen 5 of the liquid crystal display element 23 as shown in FIG. 7. Guided by the display of the periphery frame 15 of the detection area, the user can execute a pointing input with the position pointing device 2 into the periphery frame 15, thereby easily executing the input operation in the detection area with the position pointing device 2.

In the example shown in FIG. 7, the display information supplied from the PC 4 is a "contract" and the user handwrites his or her signature inside the periphery frame 15 with a touch pen that is the position pointing device 2. Namely, while checking the contents of the contract on the display screen 5, the user can enter his or her signature with the same feel as if he or she is signing on a piece of paper.

It should be noted that the arrangement position relative to the display screen 5 of the partial screen sensor 30 is a position that facilitates the pointing input by the user with the position pointing device 2 into the detection area of the partial screen sensor 30. In this example, the partial screen sensor 30 is arranged with the detection area thereof located in the lower right portion of the display screen 5. This is because a right-handed user can input his or her signature while resting his or her palm on the periphery frame (or a frame) of the display screen 5 of the input apparatus 10, while holding the touch pen.

Consequently, in the case of a left-handed user, it is desired to place the arrangement position in the lower left portion of the display screen 5; to that end, in the first embodiment, the partial screen sensor 30 can be attached to the display element unit 20 by adhesion or the like, and thus such modification can be readily implemented.

### Flow of a processing operation in the input apparatus 10

The following describes an exemplary flow of a processing operation to be executed in the entire apparatus control block 12. To be more specific, first, the entire apparatus control block 12 references a detection output of the position pointing device 2 supplied from the signal processing block 100 to determine whether the position pointing device 2 is inside the valid reading height of the partial screen sensor 30 (step S21).

If the position pointing device 2 is found not to be within the valid reading height of the partial screen sensor 30 in step S21, then the entire apparatus control block 12 supplies the display information received from the input/output interface 11 to the liquid crystal display element 23 without any change (step S22). Then, the entire apparatus control block 12 returns the procedure to step S21.

If the position pointing device 2 is found to be within the valid reading height of the partial screen sensor 30 in step S21, then the entire apparatus control block 12 causes the detection area frame controller 14 to superimpose the periphery frame of the detection area of the partial screen sensor 30 onto the display information received from the input/output interface 11. Then, the entire apparatus control block 12 supplies the display information superimposed with the periphery frame of the detection area to the liquid crystal display element 23 (step S23). Next, the entire apparatus control block 12 returns the procedure to step S21.

The following describes an exemplary flow of a processing operation to be executed in the PC 4 connected to the input apparatus 10. In the first embodiment, the PC 4 has application software (hereafter referred to simply as an application) that uses the pointing input executed with the position pointing device 2 into the partial screen sensor 30 of the input apparatus 10. In other words, the pointing input with the position pointing device 2 into the partial screen sensor 30 of the input apparatus 10 is dedicated to the above-mentioned application held in the PC 4.

In the example shown below, the user inputs his or her signature into a document, such as a contract, as shown in FIG. 7. The PC 4 has an application having a function of receiving the signature input by the user, pasting the signature to a document, such as a contract, and storing the signed document.

The PC 4 starts the transmission of the document, such as a contract, to the input apparatus 10 (step S31). Next, the PC 4 receives the pointing input detection information of the position pointing device 2 from the input apparatus 10 to determine whether the position pointing device 2 is within the valid reading height of the partial screen sensor 30 (step S32).

If the position pointing device 2 is found not to be within the valid reading height of the partial screen sensor 30 in step S32, then the PC 4 determines whether an instruction to terminate the processing has been received or not (step S33). If an instruction to terminate the processing is found not to have been received, then the PC 4 returns the procedure to step S32 to repeat the above-described processing operations therefrom. If an instruction to terminate the processing is found to have been received in step S33, then the PC 4 terminates the processing routine.

If the position pointing device 2 is found to be within the valid reading height of the partial screen sensor 30 in step S32, then the PC 4 starts the signature input application (step S34). Next, the PC 4 references the pointing input detection information of the position pointing device 2 from the input apparatus 10 to determine whether the signature input information has been received or not (step S35).

If the signature input information is found to have been not received in step S35, then the PC 4 determines whether an instruction to terminate the processing has been received or not (step S39). If an instruction to terminate the processing is found to have not been received, then the PC 4 returns the procedure to step S35 to repeat the above-described processing operations therefrom. If an instruction to terminate the processing is found to have been received in step S39, then the PC 4 ends the signature input application (step S40) and then terminates the processing routine.

If the signature input information is found to have been received in step S35, then the PC 4 converts the received signature input information into display information and synthesizes the converted display information with display information such as a document, to be transmitted to the input apparatus 10, thereby transmitting the synthesized display information to the input apparatus (step S36).

Next, the PC 4 determines whether a storage instruction has been received or not (step S37). If a storage instruction is found not to have been received, then the procedure goes to step S39, in which the PC 4 determines whether an instruction to terminate the processing has been received or not. Next, the PC 4 executes the above-described processing operations of steps S39 and thereon.

If a storage instruction is found to have been received in step S37, then the PC 4 executes storage processing of storing the display information, such as the document synthesized with signature input information, into a storage block (step S38). In the storage processing, an identifier, such as file name, is allocated to the display information, such as the document synthesized with signature input information, and the display information is later read out on the basis of the identifier.

After step S38, the procedure goes to step S39, in which the PC 4 determines whether an instruction to terminate the processing has been received or not. Then, the PC 4 executes the above-described processing operations of steps S39 and thereon.

### Variations of the first embodiment

In the example shown above, upon detecting that the position pointing device 2 has inputted the valid reading height of the partial screen sensor 30, the input apparatus 10 displays the periphery frame of the detection area of the partial screen sensor 30 as superimposed on the display information supplied from the input/output interface 11. However, the method of displaying the periphery frame of the detection area of the partial screen sensor 30 as superimposed on the display information is not limited to the above-mentioned example.

For example, an operation button may be arranged on the input apparatus 10. When the operation button is pressed, for example, the input apparatus 10 may display the periphery frame 15 of the detection area of the partial screen sensor 30 as superimposed on the display information.

When the signature input application of the PC 4 has determined that the position pointing device 2 is within the valid reading height of the partial screen sensor 30, the peripheral frame of the detection area of the partial screen sensor 30 may be displayed as superimposed on the display information to be transmitted to the input apparatus 10.

Upon detecting that the operation button arranged on the input apparatus 10 has been pressed, for example, the PC 4 may display the periphery frame 15 of the detection area of the partial screen sensor 30 as superimposed on the display information.

In the example shown above, the PC 4 references the pointing input detection information supplied from the input apparatus 10 to determine whether the position pointing device 2 is within the valid reading height of the partial screen sensor 30. If the position pointing device 2 is found to be within the valid reading height, the PC 4 starts up the signature input application. However, the method of starting up the signature input application is not limited to this example.

For example, the signature input application may be started up when the PC 4 references the pointing input detection information supplied from the input apparatus and detects that the position pointing device 2 is pointing at a particular position or part predetermined in the detection area of the partial screen sensor 30, for example. Alternatively, the signature input application may be started up by the PC 4 on the basis of a particular movement inside the detection area of the partial screen sensor 30 rather than the height position of the position pointing device 2 or a position inside the detection area, for example.

It is also practicable to arrange an operation button on the input apparatus 10 and transmit operation information of the operation button to the PC 4, thereby making the PC 4 start up the signature input application when the user presses the operation button, for example.

In the first embodiment described above, the input apparatus 10 is connected to the PC 4. However, it is also practicable to install the function of the above-mentioned application of the PC 4 onto the input apparatus 10 and, at the same time, arrange a predetermined key operation portion (device) including a storage key and an end key for the input apparatus 10. Then, the necessity for the PC 4 is eliminated, to thereby provide a configuration in which the input apparatus 10 alone may be used to realize the first embodiment described above, for example.

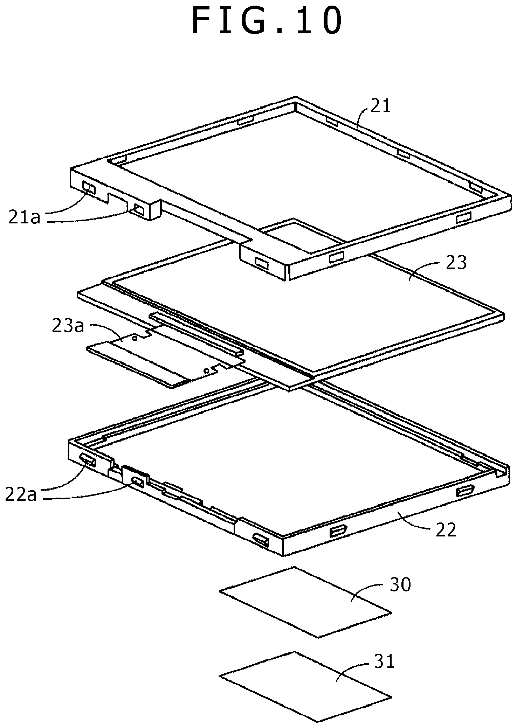

Further, in the first embodiment described above, the display element unit 20 is based on the liquid crystal display element 23 and uses the backlight 24. However, as shown in FIG. 10, another configuration may be available in which the display element unit 20 does not use the backlight 24. In the case of the display element unit 20 of the example shown in FIG. 10, the partial screen sensor 30 is attached directly to the rear side (the side opposite to the display screen 5) of the liquid crystal display element 23. Like the example shown above, the shield plate 31 (or a shield sheet) is arranged on the rear side of the partial screen sensor 30.

It should be noted that, in the first embodiment described above, the periphery frame of the detection area of the partial screen sensor 30 is displayed on the display screen 5 to present the detection area of the partial screen sensor 30 to the user. However, the technique of presenting the detection area of the partial screen sensor 30 to the user is not limited to the displaying of the periphery frame; it is also practicable to use any one of various other techniques, such as displaying the detection areas in a particular color or in a translucent state, for example.

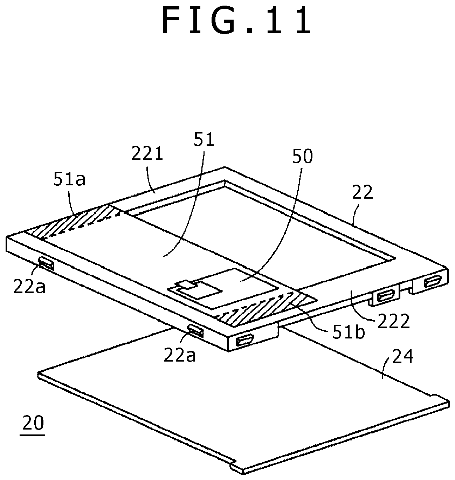

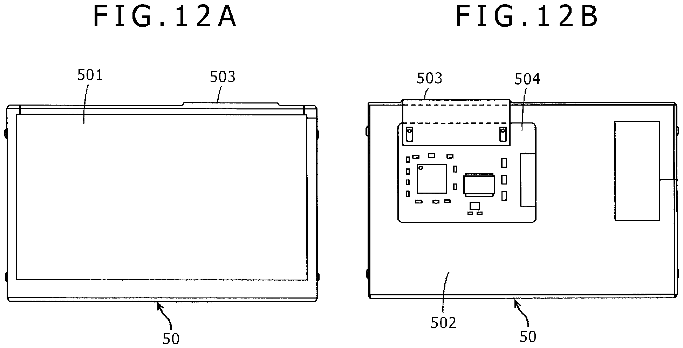

### The second embodiment; FIGS. 11, 12A and 12B

In the first embodiment described above, the partial screen sensor 30 based on electromagnetic induction is attached directly to the rear side (the side opposite to the display screen 5) of the display element unit 20. By contrast, in the second embodiment of the present invention, the partial screen sensor 30 is attached to the rear side (the side opposite to the display screen 5) of the display element unit 20 via a predetermined member.

Referring to FIG. 11, there is shown the main section of the second embodiment, in which a display element unit 20 is shown upside down as compared to that shown in FIG. 2, i.e., with a lower metal frame 22 on top.

In the second embodiment, a sheet 51 (that is an insulation sheet) formed by a nonconductive substance is arranged so as to bridge a side 221 and a side 222 of the lower metal frame 22 that are opposite to each other. The nonconductive substance sheet 51 is attached with double-faced adhesive tapes 51a and 51b (hatched sections in FIG. 11) at sections overlapping with the side 221 and the side 222. The nonconductive substance sheet 51 is attached and fixed to the side 221 and the side 222 with the double-sided adhesive tapes 51a and 51b.

Then, a partial screen sensor unit 50 is attached to the nonconductive substance sheet 51, specifically, to overlay the side (the rear side) opposite to the display screen 5 of the display element unit 20. The partial screen sensor unit 50 has a configuration in which the partial screen sensor 30 and the shield plate 31 used in the first embodiment described above are combined together, and connected with a signal processing block 100.

Referring to FIGS. 12A and 12B, there is shown an exemplary external configuration of the partial screen sensor unit 50. To be more specific, FIG. 12A shows the partial screen sensor unit 50 viewed from the side of the pointing input with the position pointing device 2. Namely, in FIG. 12A, a front surface 501 is the surface of the partial screen sensor unit 50 and, if the position pointing device 2 is positioned within the upper valid reading height on the side of the front surface 501, then the partial screen sensor unit 50 can read the position of the position pointing device 2.

FIG. 12B shows the partial screen sensor unit 50 viewed from the side of a rear surface 502. On the rear surface 502, a wiring board block 504 on which the signal processing block 100 is formed is arranged. The wiring board block 504 is connected to the partial screen sensor 30 through a flexible board 503.

The partial screen sensor unit 50 has its front surface 501 attached with the nonconductive substance sheet 51 by adhesion, thereby being fixed to the display element unit 20. It should be noted that the nonconductive substance sheet 51 is made of a material that provides electromagnetic induction coupling between the partial screen sensor unit 50 and the position pointing device 2.

According to the second embodiment, the partial screen sensor unit 50 needs only to be mounted to the nonconductive substance sheet 51, which is arranged so as to bridge the opposite sides 221 and 222 of the lower metal frame 22. Thus, the partial screen sensor unit 50 can be easily detached and attached, which leads to a simplified manufacturing process and a lowered manufacturing cost.

The second embodiment can be used in substantially the same manner as the first embodiment described above to provide substantially the same effects as those of the first embodiment. Further, the variations to the first embodiment are also applicable to the second embodiment in substantially the same manner.

It should be noted that the nonconductive substance sheet 51 may be a nonconductive substance plate.

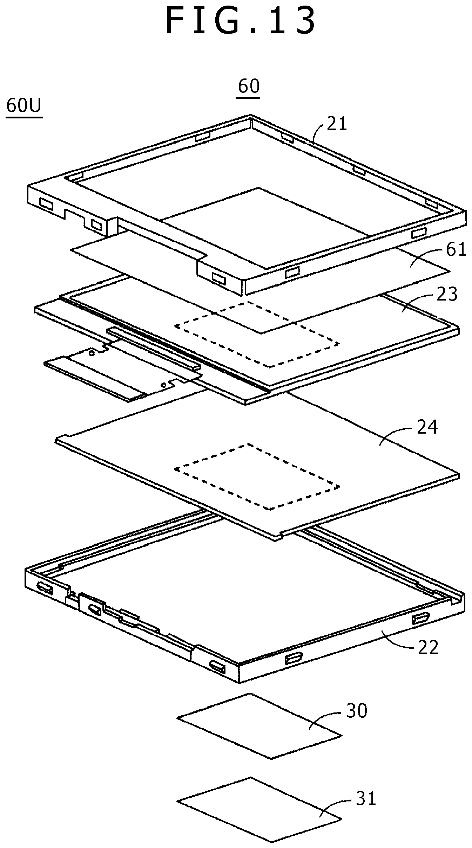

### The third embodiment; FIGS. 13 through 16

In the first embodiment and the second embodiment described above, pointing input can be executed only in the detection area that is a partial area of the display screen 5 by use of the position pointing device 2. However, many recently developed input apparatuses have various types of point input by use of the entirety of the display screen 5 as a pointing input detection area. In some of these input apparatuses, a position detection sensor using the entirety of the display screen as the detection area is attached to the surface of the display screen on the display element unit.

The third embodiment is an input apparatus having a position detection sensor with the entire area of the display screen 5 used as the detection area (i.e., a full screen sensor), in addition to the partial screen sensor that is a position detection sensor with a partial area of the display screen 5 as the detection area.

The input apparatus of the third embodiment incorporates the function of the PC 4 of the first and second embodiments.

FIG. 13 is an exploded perspective view illustrating a display element unit (including a full screen sensor) and a partial screen sensor of an input apparatus 60 of the third embodiment. The example shown in FIG. 13 is substantially equal to a configuration in which a full screen sensor is added to the display element unit 20 shown in the exploded perspective view of the first embodiment shown in FIG. 2. Referring to FIG. 13, components similar to those of the first embodiment are denoted by the same reference numerals.

To be more specific, a display element unit 60U of the input apparatus 60 practiced as the third embodiment has a unitized configuration in which a full screen sensor 61 is arranged between a liquid crystal display element 23 and an upper metal frame 21 as shown in FIG. 13. In this example, on the rear side of a backlight 24 of the display element unit 60U, a partial screen sensor 30 and a shield plate 31 are directly attached as with the first embodiment described previously.

In this example, the full screen sensor 61 uses a position detection sensor made up of a touch panel based on resistive filming (or analog resistive filming). However, the full screen sensor 61 may use a position detection sensor made up of a touch panel based on a capacitive method. The configurations of touch panels based on resistive filming and capacitive methods are well known and, therefore, their detailed description is omitted.

If the full screen sensor 61 is based on resistive filming, then the position pointing device may be a user's finger or the position pointing device 2 in the form of a touch pen used in the first embodiment described previously. It should be noted, however, that the detection area of the partial screen sensor 30 as a partial sensor is included in the detection area covering the entire display screen of the full screen sensor 61, so that use of the position pointing device 2 made up of a touch pen may detect a pointing input of the position pointing device 2 in a duplicate manner.

To be more specific, if the position pointing device 2 is separated away from the display screen 5 but positioned within the value reading height of the partial screen sensor 30, the position pointing device 2 is detected only by the partial screen sensor 30. However, if the user executes pointing input by physically contacting the position pointing device 2 to the display screen 5, the pointing input with the position pointing device 2 is detected also by the full screen sensor 61, in addition to by the partial screen sensor 30.

In the input apparatus 60 of the third embodiment, the position pointing detection output from the partial screen sensor 30 is deemed valid if the pointing input with the position pointing device 2 is detected by both the partial screen sensor 30 and the full screen sensor 61.

Further, if a pointing input is executed with a users finger, for example, with the input apparatus 60 of the third embodiment, then the pointing input is detected only by the full screen sensor 61.

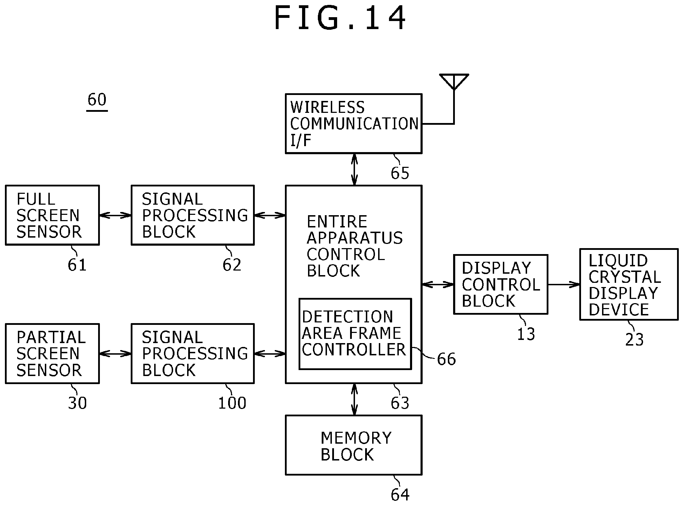

Referring to FIG. 14, there is shown a block diagram illustrating an exemplary internal configuration of the input apparatus 60 of the third embodiment, in which the components similar to those of the first embodiment are denoted by the same reference numerals. The input apparatus 60 of the third embodiment has the partial screen sensor 30, the signal processing block 100, a display control block 13, and a liquid crystal display element 23. The input apparatus 60 also has the full screen sensor 61, a signal processor block 62 therefor, an entire apparatus control block 63, a memory block 64, and a wireless communication interface 65.

The entire apparatus control block 63 is formed of a microcomputer and controls the entirety of the input apparatus 60 of the third embodiment. As described above, the input apparatus 60 of the third embodiment also has the function of a personal computer, and the memory block 64 stores various software programs for operating the input apparatus 60 as a personal computer. The entire apparatus control block 63 executes various processing operations by use of these software programs stored in the memory block 64.

The memory block 64 also stores, for example, the display information for displaying a software keyboard, the display information for displaying other input operations, the display information for displaying a contract and the like created by the operation input inputted via the display screen, and the information obtained through the Internet.

The full screen sensor 61 provides the operation input block for the input apparatus 60, and receives a pointing input via a user's finger or a touch pen. A signal processing block 62 supplies a signal for detecting the pointing input received via a finger or a touch pen by the full screen sensor 61, thereby detecting the pointing input via a finger or a touch pen on the full screen sensor 61. Then, the signal processing block 62 supplies the detection information of the pointing input via a finger or a touch pen on the full screen sensor 61 to the entire apparatus control block 63.

Receiving the pointing input detection information from the full screen sensor 61, the entire apparatus control block 63 executes the processing corresponding to an application being executed at that moment. For example, if an application for selecting an application from the menu screen is being executed, the pointing input detection information from the full screen sensor 61 is application selecting information. Therefore, the entire apparatus control block 63 executes the processing of starting up the application selected by the pointing input detection information. If a software keyboard application is being executed, for example, the entire apparatus control block 63 detects which key has been pressed, on the basis of the pointing input detection information from the full screen sensor 61, thereby executing the processing of displaying a character corresponding to the pressed key on the display screen 5.

When a communication request for a connection to the Internet for example is selected by the full screen sensor 61, the wireless communication interface 65 is used to connect the input apparatus 60 to the Internet under the control of the entire apparatus control block 63. Then, the entire apparatus control block 63 executes the connection processing for the connection to the Internet via the wireless communication interface 65, thereby controlling the transfer of various kinds of information. Next, the entire apparatus control block 63 also executes the processing of storing the information received via the wireless communication interface 65 into the memory block 64.

Further, the entire apparatus control block 63 supplies the display information read from the memory block 64 and the display information received through the wireless communication interface 65 to the liquid crystal display element 23 through the display control block 13, thereby displaying these pieces of information on the display screen 5.

In the third embodiment, the entire apparatus control block 63 has a function of a detection area frame controller 66 for displaying a detection area frame on a display screen when the pointing input detection information from the partial screen sensor 30 is indicating that the position pointing device 2 is within the valid reading height while a predetermined application is being executed. The predetermined application is an application that especially uses the pointing input detection information of the partial screen sensor 30. One example is an application for processing the display information of a document requiring a signature, such as a contract, as described above with respect to the embodiments described above.

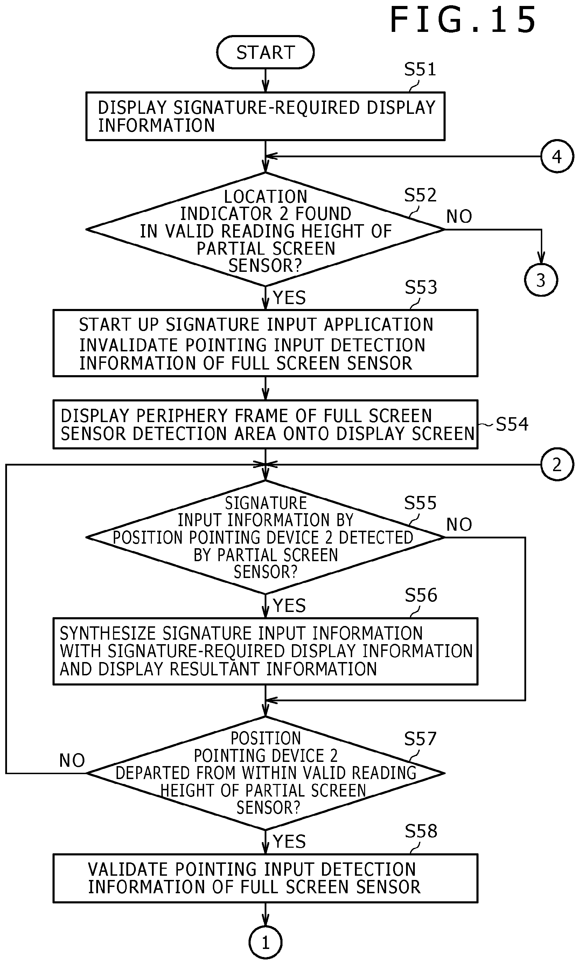

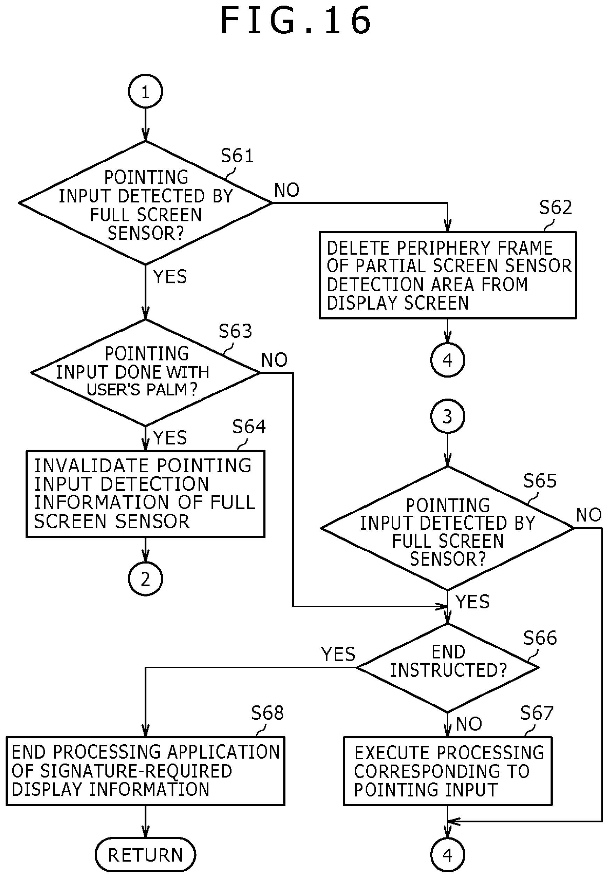

The following describes an example of the processing to be executed in the entire apparatus control block 63 in the input apparatus 60 practiced as the third embodiment, with the above-mentioned application for processing the display information of a document requiring a signature, such as a contract, with reference to the flowcharts shown in FIG. 15 and FIG. 16.

The processing in these flowcharts shown in FIG. 15 and FIG. 16 is started by the entire apparatus control block 63 when the display information requiring a signature is selected by a pointing input operation performed on the full screen sensor 61 to instruct the start of the processing.

First, the entire apparatus control block 63 supplies the selected display information requiring a signature to the liquid crystal display element 23 via the display control block 13, thereby displaying the display information on the display screen 5 (step S51). Next, by referencing a detection output of the position pointing device 2 from the signal processing block 100, the entire apparatus control block 63 determines whether the position pointing device 2 is within the valid reading height of the partial screen sensor 30 (step S52).

If the position pointing device 2 is found to be within the valid reading height of the partial screen sensor 30 in step S52, then the entire apparatus control block 63 starts up the signature input application. Then, the entire apparatus control block 63 treats the pointing input detection information of the full screen sensor 61 from the signal processing block 62 as invalid information (step S53).

Next, the entire apparatus control block 63, using the detection area frame controller 66, superimposes the periphery frame of the detection area of the partial screen sensor 30 onto the display information, to thereby display the periphery frame of the detection area on the display screen 5 of the liquid crystal display element 23 (step S54).

Then, by referencing the pointing input detection information from the signal processing block 100, the entire apparatus control block 63 determines whether the signature input information inputted by the position pointing device 2 has been detected or not by the partial screen sensor 30 (step S55).

If the signature input information is found to have been detected in step S55, then the entire apparatus control block 63 converts the detected signature input information into display information and synthesizes the resultant display information with the display information for displaying a document requiring a signature for example, thereby supplying the synthesized display information to the display control block 13. The display control block 13 supplies the received display information to the liquid crystal display element 23, thereby displaying the display information, such as a document with a signature synthesized, on the display screen 5 (step S56).

After step S56, the entire apparatus control block 63 determines whether the position pointing device 2 has departed from within the valid reading height of the partial screen sensor 30 (step S57). Also, if the signature input information by the position pointing device 2 has not been detected by the partial screen sensor 30 in step S55, then the entire apparatus control block 63 goes directly to step S57 while skipping step S56.

If the position pointing device 2 has not departed from within the valid reading height of the partial screen sensor 30 in step S57, then the entire apparatus control block 63 returns the procedure to step S55 to repeat the above-described processing operations therefrom.

If the position pointing device 2 has departed from within the valid reading height of the partial screen sensor 30 in step S57, then the entire apparatus control block 63 validates the pointing input detection information of the full screen sensor 61 received from the signal processing block 62 (step S58).

Next, from the pointing input detection information of the full screen sensor 61 supplied from the signal processing block 62, the entire apparatus control block 63 determines whether the pointing input for the full screen sensor 61 has been detected or not (step S61 shown in FIG. 16). If the pointing input for the full screen sensor 61 has not been detected in step S61, then the entire apparatus control block 63 deletes the periphery frame 15 of the detection area of the partial screen sensor 30 from the display screen 5 (step S62). Then, the entire apparatus control block 63 returns the procedure to step S52 to repeat the above-described processing operations therefrom.

If the pointing input for the full screen sensor 61 has been detected in step S61, then the entire apparatus control block 63 determines whether the detected pointing input has been done with a users palm (step S63). If the detected pointing input has been done with a user's palm in step S63, then the entire apparatus control block 63 treats the pointing input detection information of the full screen sensor 61 as invalid (step S64). Then, the entire apparatus control block 63 returns the procedure to step S55 to repeat the above-described processing operations therefrom.

The processing operations from step S58 to step S64 are executed to determine whether a signature input is to be continued, after the touch pen as the position pointing device 2 is used to input a signature in the detection area of the partial screen sensor 30 and then is temporarily removed from the detection area.

To be more specific, in inputting a signature with a touch pen as the position pointing device 2 into the partial screen sensor 30, a user inputting the signature generally brings the touch pen over the partial screen sensor 30 with his or her palm in contact with the display screen 5 and then inputs the signature. Next, if the user temporarily stops the signature input operation but intends to resume the input operation, the user generally keeps his or her palm touching the display screen 5.

Therefore, in the third embodiment, even if the position pointing device 2 is temporarily removed from the partial screen sensor 30, the entire apparatus control block 63 determines that the state in which the user's palm is detected by the full screen sensor 61 means that the user intends to continue the signature input with the touch pen in the partial screen sensor 30. Hence, if the pointing input detected by the full screen sensor 61 is found to have been executed with the user's palm in step S63, then the entire apparatus control block 63 handles the pointing input detection information of the full screen sensor 61 as again invalid and returns the procedure to step S55, thereby quickly detecting the input with the touch pen in the partial screen sensor 30.

On the other hand, if the detected pointing input has not been done with the user's palm in step S63, then the entire apparatus control block 63 determines whether the detected pointing input is an instruction to terminate the processing, such as an instruction based on activation of an end icon (step S66). If the detected pointing input is not an instruction for termination in step S66, then the entire apparatus control block 63 treats the pointing input as an instruction based on another icon, thereby executing the processing corresponding to the operation of the icon (step S67). For example, in step S67, in accordance with a storage instruction issued by operating a storage icon, the information of a document in which the signature has been entered is stored in the memory block 64.

If the pointing input is an instruction for termination in step S66, then the entire apparatus control block 63 terminates the processing application for processing the display information such as a document requiring a signature, thereby terminating the processing routine.

If the position pointing device 2 is not within the valid reading height of the partial screen sensor 30 in step S52, then the entire apparatus control block 63 determines from the pointing input detection information of the full screen sensor 61 supplied from the signal processing block 62 whether the pointing input for the full screen sensor 61 has been detected or not (step S65). If the pointing input for the full screen sensor 61 has not been detected in step S65, then the entire apparatus control block 63 returns the procedure to step S52 to repeat the above-described processing operations therefrom.

If the pointing input for the full screen sensor 61 has been detected in step S65, then the entire apparatus control block 63 advances the procedure to step S66 to execute the above-described processing operations therefrom.

As described above, according to the third embodiment, if a display element unit has a full screen sensor, a partial screen sensor can be arranged on the display element unit without reconfiguring the unit. In addition, in the third embodiment, by prioritizing the pointing input detection information of the partial screen sensor over the pointing input detection information of the full screen sensor, the pointing input detection information of the partial screen sensor and the pointing input detection information of the full screen sensor can be appropriately controlled in a manner exclusive to each other, thereby providing an advantage of proper and selective pointing input detection.

### Variations of the third embodiment and variations of the first embodiment through the third embodiment

It should be noted here that the input apparatus 60 of the third embodiment has been described above as incorporating the function of a personal computer. However, the input apparatus 60 of the third embodiment can be configured also as an input apparatus for an external apparatus such as personal computer as with the first and second embodiments described above. If the input apparatus 60 is configured to be an input apparatus for an external apparatus such as personal computer, the input apparatus 60 can be configured so as to simply supply the pointing input detection information of the full screen sensor and the pointing input detection information of the partial screen sensor to an external apparatus such as a personal computer, in a manner where these two items of information can be distinguished from each other. The exclusive control of these two items of information shown in FIG. 15 and FIG. 16 is executed by an external apparatus such as a personal computer.

It should be noted however that, in the case where the third embodiment is configured as an input apparatus of an external apparatus, the exclusive control of these two items of information shown in FIG. 15 and FIG. 16 and the displaying of the periphery frame 15 of the partial screen sensor can also be executed by the input apparatus 60.

In the first embodiment through the third embodiment, only one partial screen sensor 30 that is a position detection sensor is arranged on the rear side of the display element unit. It is also practicable to arrange two or more partial screen sensors based on electromagnetic induction on the rear side of the display element unit.

If two or more partial screen sensors are arranged, it is required not to overlap the detection areas with each other inside the display screen 5 to provide the detection areas of the two or more partial sensors. It is also required to attach identification information (ID) unique to each partial screen sensor to the pointing input detection output from each of the partial screen sensors. These measures can discriminate the pointing input detection information of one partial screen sensor from that of another based on the attached identification information, so that different applications can be started up for the different partial screen sensors.

For example, an application to be started up for one partial screen sensor can be a hand-written character input application for writing a signature as described above. Further, an application to be started up for another partial screen sensor can be an application for processing a pointing input operation.

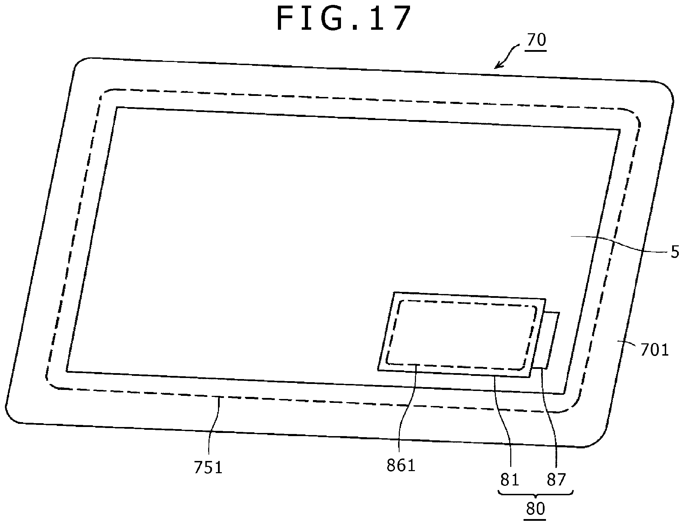

### The fourth embodiment; FIG. 17 through FIG. 24

With the input apparatus practiced as the first embodiment through the third embodiment described above, a partial screen sensor is arranged on the rear side of a display element unit; however, it is also practicable to arrange a partial screen sensor on the front side of a display element unit. With an input device practiced as the fourth embodiment, a partial screen sensor is arranged on the front side of a display element unit.

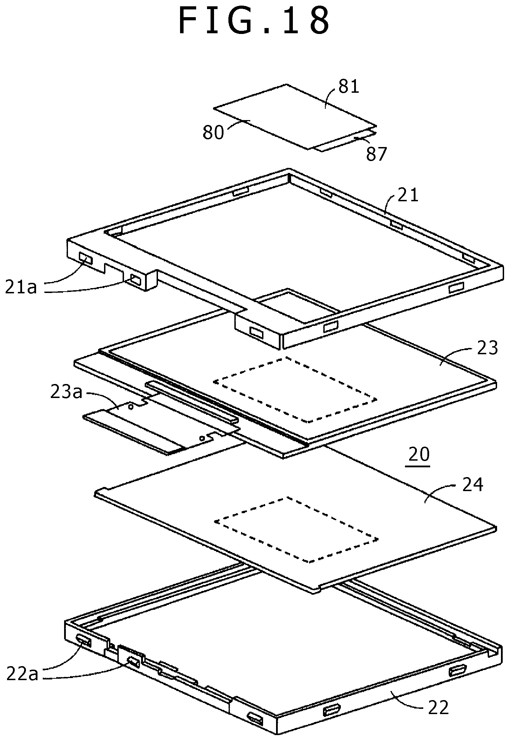

Referring to FIG. 17, there is shown an exemplary external configuration of an input apparatus 70 of the fourth embodiment. With the input apparatus 70 of the fourth embodiment, as shown additionally in FIG. 18, a housing 701 accommodates a partial screen sensor unit 80 on the exposed front surface of a display screen 5 of a liquid crystal display element 23 of a display element unit 20, unlike the input apparatus 10 (refer to FIG. 2) of the first embodiment.

In the input apparatus 70 of the fourth embodiment, the partial screen sensor unit 80 is transparent or translucent especially in a sensor section thereof, and is detachably pasted onto the display screen 5 of the input apparatus 70. The sensor section being transparent denotes that the sensor section is colorless and transparent, and the sensor section being translucent denotes that the sensor section has a predetermined color but is regarded as being a transparent.

The partial screen sensor unit 80 may be attached to the display screen 5 in a manner in which the partial screen sensor unit 80 is simply placed on the display screen 5 or pasted on the display screen 5 with an adhesive section provided on the rear side of the partial screen sensor unit 80, which may be easily detachable from the display screen 5.

The partial screen sensor unit 80 is connected to a signal processing control circuit section accommodated in the housing of the input apparatus 70 through wireless communication based on electromagnetic wave or optical means. In addition, the partial screen sensor unit 80 is configured to receive an electric power supply wirelessly from an electric power transmission block inside the housing 701 of the input apparatus 70.

In the fourth embodiment, two or more partial screen sensor units 80 may be arranged for such applications as text input for signatures, a pointing device, a drawing tool, and the like. Each of the two or more partial screen sensor units 80 outputs pointing input detection information by attaching thereto unique identification information.

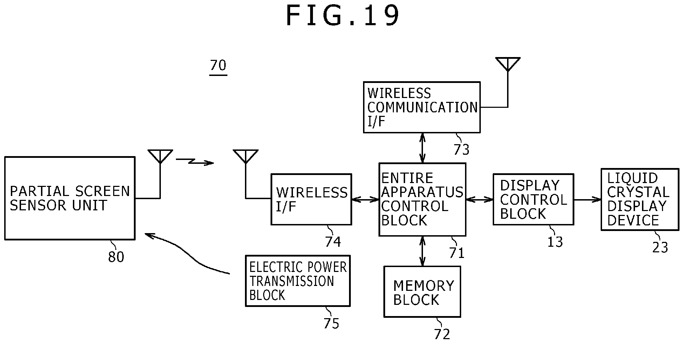

Referring to FIG. 19, there is shown a block diagram illustrating an exemplary entire configuration of the input apparatus 70 practiced as the fourth embodiment. Referring to FIG. 19, components similar to those of the first embodiment through the third embodiment are denoted by the same reference numerals, and their detailed description is omitted.

Like the third embodiment, the input apparatus 70 of the fourth embodiment is configured to have the function of a personal computer. The input apparatus 70 of the fourth embodiment has, in the housing 701, a display control block 13, a liquid crystal display element 23, an entire apparatus control block 71, a memory block 72, a wireless communication interface 73, a wireless interface 74, and an electric power transmission block 75. In addition, the input apparatus 70 of the fourth embodiment has the partial screen sensor unit 80 outside the housing 701.

The entire apparatus control block 71 controls the entirety of the input apparatus 70 of the fourth embodiment and includes a microcomputer. The memory block 72 stores various software programs for operating the input apparatus 70 as a personal computer. The entire apparatus control block 71 executes various processing operations by use of these software programs stored in the memory block 72. In addition, the memory block 72 stores the display information for displaying a contract and the like, which is created based on the operation input entered via the display screen, and also stores the information obtained through the Internet, for example.

Further, the memory block 72 stores software programs for executing applications for realizing predetermined functions by use of the pointing input detection information from the two or more partial screen sensor units 80 for different applications.

The wireless communication interface 73 is used to connect the input apparatus 70 to the Internet under the control of the entire apparatus control block 71 when a communication request for an Internet connection is detected by the entire apparatus control block 71. Then, the entire apparatus control block 71 executes the Internet connection processing through the wireless communication interface 73, thereby controlling the transfer of various kinds of information. Next, the entire apparatus control block 71 also executes the processing of storing the information received through the wireless communication interface 73 into the memory block 72.

Further, the entire apparatus control block 71 supplies the display information read from the memory block 72 and the display information received through the wireless communication interface 73 to the liquid crystal display element 23 via the display control block 13, thereby displaying these pieces of information on the display screen 5.

The wireless interface 74 receives the pointing input detection information from the partial screen sensor unit 80 and transfers the received information to the entire apparatus control block 71. In this example, wireless communication based on Bluetooth for example is executed between the partial screen sensor unit 80 and the wireless interface 74. Not only the wireless communication based on Bluetooth but also the wireless communication based on WIFI (Wireless Fidelity) is available, for example.

The electric power transmission block 75 supplies electric power to the partial screen sensor unit 80. The electric power transmission block 75 will be described below.

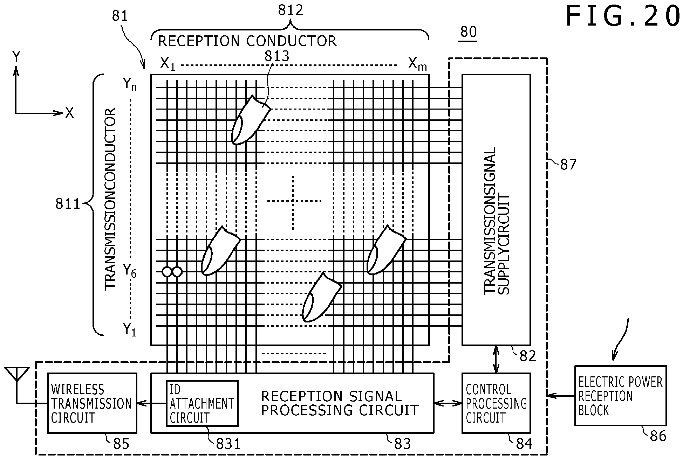

The partial screen sensor unit 80 of the fourth embodiment uses a sensor based on a cross point capacitive coupling method, which was developed from the sensor based on a projection type capacitive coupling method. FIG. 20 shows an exemplary configuration of the partial screen sensor unit 80 of the fourth embodiment.

The partial screen sensor unit 80 of the fourth embodiment is made up of a sensor block 81 and a signal processing block 87 as shown in FIG. 20. The signal processing block 87 has a transmission signal supply circuit 82, a reception signal processing circuit 83, a control processing circuit 84, a wireless transmission circuit 85, and an electric power reception block 86.

The sensor block 81 of the partial screen sensor unit 80 of the fourth embodiment has a transmission conductor group 811 made up of two or more transparent transmission conductors Y₁ through Yₙ and a reception conductor group 812 made up of two or more transparent reception conductors X₁ through Xₘ. It should be noted that a transparent insulation layer is formed between the transmission conductor group 811 and the reception conductor group 812. The transmission conductors Y₁ through Yₙ are linear conductors extending in a predetermined direction (X direction in FIG. 20) and having a predetermined shape. The two or more transmission conductors Y₁ through Yₙ are arranged in parallel to each other with a predetermined space in between. The reception conductors X₁ through Xₘ are linear conductors extending in a direction (Y direction in FIG. 20) crossing the extending direction of the transmission conductors Y₁ through Yₙ and having a predetermined shape. The two or more reception conductors X₁ through Xₘ are arranged in parallel to each other with a predetermined space in between.

As described above, the sensor block 81 has a transparent configuration. It should be noted that the sensor block 81 may be in a state having a predetermined color and is translucent. The transmission signal supply circuit 82, the reception signal processing circuit 83, the control processing circuit 84, the wireless transmission circuit 85, and the circuit section of the electric power reception block 86 are arranged inside the signal processing block 87. The signal processing block 87 is connected to the outside of the sensor block 81 as a non-transparent section as shown in FIG. 17.

In the partial screen sensor unit 80 configured as described above, a predetermined transmission signal from the transmission signal supply circuit 82 is supplied to a transmission conductor selected by a control signal supplied from the control processing circuit 84. Concurrently with the supply of the transmission signals to the transmission conductors, the reception signal processing circuit 83 scans the reception conductors, based on a control signal from the control processing circuit 84, in order to detect changes of currents flowing through points (hereafter referred to as cross points) between the transmission conductors, to which the transmission signals have been supplied, and the reception conductors, per reception conductor of each of the cross points.

To be more specific, on the sensor block 81, at a position where a pointing body 813 such as a user's finger is placed, the current is branched out via the pointing body 813, thereby changing the current flowing into the reception conductor. Therefore, by detecting a cross point where a current changes, the reception signal processing circuit 83 detects the position of the pointing body 813.

The reception signal processing circuit 83 supplies a detection result of the position of the pointing body 813 to the wireless transmission circuit 85 as pointing input detection information. It should be noted that the reception signal processing circuit 83 has an ID attaching circuit 831 for attaching identification information (ID) of each partial screen sensor unit 80 to the pointing input detection information, to be supplied to the wireless transmission circuit 85.

The wireless transmission circuit 85 transmits the pointing input detection information, to which the identification information (ID) is attached, to the wireless interface 74 in the housing 701. The entire apparatus control block 71 receives the pointing input detection information from the partial screen sensor unit 80 through the wireless interface 74, to thereby determine, based on the attached ID, for which application the partial screen sensor unit 80 is used. Then, in accordance with an obtained decision result, the entire apparatus control block 71 starts up a corresponding application.

It should be noted that, as shown in FIG. 20, two or more cross points are formed on the sensor block 81, so that a pointing body detection apparatus based on cross point capacitive coupling can detect two or more pointing bodies at the same time.

The following describes exemplary configurations of the electric power transmission block 75 and the electric power reception block 86. In the fourth embodiment, the electric power is transmitted from the electric power transmission block 75 to the electric power reception block 86 by an electric power transmission method based on the resonance phenomenon of a magnetic field. As an electric power transmission system based on the magnetic field resonance phenomenon, a system such as that disclosed in U.S. Patent Application Publication No. 2007/0222542 may be used.

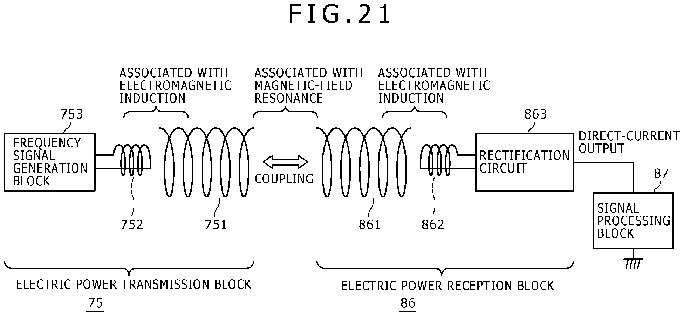

Referring to FIG. 21, there is shown an exemplary configuration of an electric power transmission system based on the magnetic field resonance phenomenon practiced as the fourth embodiment. Shown in FIG. 21 is a block diagram illustrating an exemplary system configuration, in which the electric power transmission block 75 that is the supply source of electric power and the electric power reception block 86 that is the supply destination (the receiving side) of electric power are provided in a one-to-one relation. It should be noted however that, from the electric power transmission block 75, electric power transmission can be directed to two or more electric power reception blocks 86 at the same time.

In the example shown in FIG. 21, the self resonance frequency of an air-core coil that forms a resonance element 861 of the electric power reception block 86 is frequency fo, which matches the self resonance frequency of a resonance element 751 of the electric power transmission block 75. Therefore, the resonance element 751 of the electric power transmission block 75 and the resonance element 861 of the electric power reception block 86 are in a magnetic field resonance relation, in which a coupling amount is maximized and the loss is minimized at the frequency fo.

As described above, in this example, the resonance element 751 of the electric power transmission block 75 and the resonance element 861 of the electric power reception block 86 are in a magnetic field resonance relation, so that an alternate current is supplied from the resonance element 751 to the resonance element 861 in a non-contact manner at the resonance frequency fo.

In the electric power reception block 86, an induction current is induced in an exciting element 862 on the basis of electromagnetic induction by the alternate current appearing in the resonance element 861. Then, the induction current induced by the exciting element 862 is rectified by a rectification circuit 863 into a direct current to be supplied to the signal processing block 87 as a power supply current.

As described above, electric power is wirelessly transmitted from the electric power transmission block 75 to the electric power reception block 86 on the basis of the magnetic field resonance phenomenon. It should be noted that a method of the electric power transmission from the electric power transmission block 75 to the electric power reception block 86 is not limited to the method of using the magnetic field resonance phenomenon described above; it is practicable to use any of the electric power transmission methods based on an electric field and an electromagnetic wave, for example.

As described above, in the fourth embodiment, two or more partial screen sensor units 80 are prepared. The input apparatus 70 has different applications for the different partial screen sensor units 80, respectively. Based on the identification information (ID) attached to the pointing input detection information from the partial screen sensor unit 80, the entire apparatus control block 71 of the input apparatus 70 recognizes each partial screen sensor unit 80. Further, the entire apparatus control block 71 detects an application corresponding to the recognized partial screen sensor unit 80 and starts up the application, thereby processing the received pointing input detection information through the started application to execute a predetermined function.

The following describes examples of applications that are provided by the input apparatus 70 of the fourth embodiment for two or more different partial screen sensor units 80.

The first example is an application for allowing the user to hand-write his or her signature on the display screen 5 through the partial screen sensor unit 80 in a state where a document requiring a user's signature is displayed on the display screen 5, like the embodiments described previously.

In this example, in the fourth embodiment, the entire apparatus control block 71 of the input apparatus 70 displays a positioning marker on the display screen 5, which is used to indicate and align a position at which the signature is to be entered in the document requiring the signature with a position at which the partial screen sensor unit 80 is to be attached.

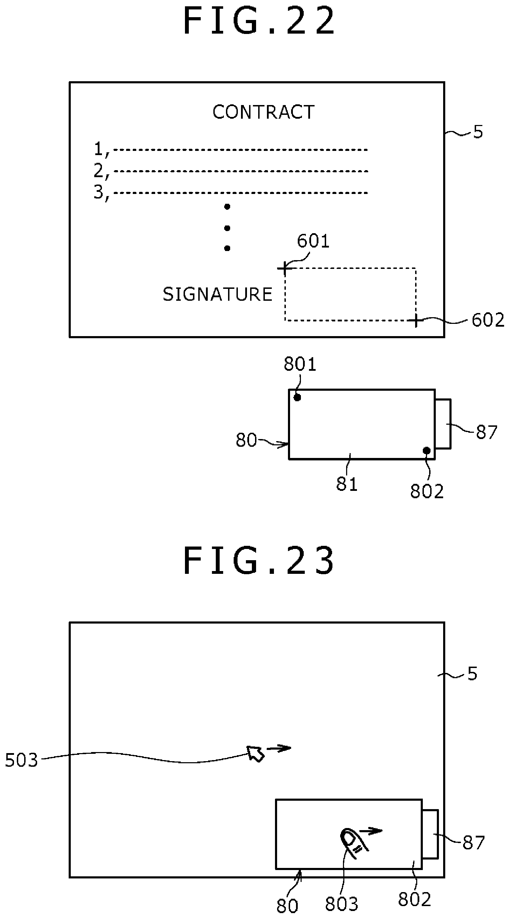

For example, as shown in FIG. 22, in this example, the entire apparatus control block 71 displays a positioning markers 601 and 602 for indicating a position at which the partial screen sensor unit 80 is to be attached, which is aligned with an area in which a signature is to be entered in the document requiring the signature displayed on the display screen 5.

Still referring to FIG. 22, positioning markers 801 and 802 corresponding to the above-described positioning markers 601 and 602 of the display screen 5 are arranged on the sensor block 81 of the partial screen sensor unit 80 for signature input. In the example shown in FIG. 22, the sensor block 81 is rectangular in shape, so that the positioning markers 601 and 602 and the positioning markers 801 and 802 are arranged to be located in the upper left corner and the lower right corner of the rectangular sensor block 81.

The user positions the partial screen sensor unit 80 for signature input such that the positioning markers 801 and 802 arranged on the sensor block 81 are matched with the positioning markers 601 and 602 of the display screen 5, and attaches the positioned partial screen sensor unit 80 onto the front surface of the display screen 5. Then, when the signature is entered through a capacitive touch pen in the sensor block 81, the entered characters are displayed in the signature input area of the display screen 5. In the display screen 5, the user can see the signature characters entered in the sensor block 81 as the signature characters are being entered.

The second example is an application for attaching the partial screen sensor unit 80 to a position on the display screen 5, at which it is easy for the user to perform an input operation such as a pointing input operation using a mouse as a pointer. In the application of the second example, the detection area of the sensor block 81 may be made to correspond with the full display area of the display screen 5. Then, for example, the application displays a pointer cursor at the position on the display screen 5, which corresponds to the pointing position that is pointed to by the position pointing device inside of the detection area of the sensor block 81.

Specifically, as shown in FIG. 23, in the case of the application of the second example, if the user executes a pointing operation with the position pointing device 803 such as a user's finger in the detection area of the sensor block 81 of the partial screen sensor unit 80, then the entire apparatus control block 71 displays a cursor 503 at the position on the display screen 5 corresponding to the position in the detection area of the sensor block 81, to thereby display that the position on the display screen 5 is pointed to.

For example, as shown in FIG. 23, if the user performs a pointing input operation with the position pointing device 803 such as a user's finger at the center of the detection area of the sensor block 81, then the cursor 503 is displayed at the center of the display screen 5. If the user moves the position pointing device 803 in the direction indicated by the arrow in the detection area of the sensor block 81, the cursor 503 of the display screen 5 also moves in the direction indicated by the arrow. Then, when the user performs a pointing input operation in the upper left corner of the detection area of the sensor block 81 with the position pointing device 803, the cursor 503 is displayed also in the upper left corner of the display screen 5.

Further, when the user executes a predetermined gesture defined with the sensor block 81, the pointing input operation corresponding to the performed predetermined gesture can be executed, such as an"entef operation or an icon button selection operation. For example, the gesture of consecutively tapping the sensor block 81 twice may be defined to execute an "enter" operation.

In the fourth embodiment, when the partial screen sensor unit 80 is attached to the front surface of the display screen 5, the partial screen sensor unit 80 receives the electric power transmission based on magnetic field resonance from the electric power transmission block 75 at the electric power reception block 86, thereby entering into a ready state. Then, the entire apparatus control block 71 starts receiving pointing input detection information from the partial screen sensor unit 80 in the ready state. Next, the entire apparatus control block 71 detects the identification information (ID) attached to the pointing input detection information, thereby starting up the corresponding application. Then, the entire apparatus control block 71 executes the processing corresponding to the pointing input entered by the position pointing device in the partial screen sensor unit 80.

When the partial screen sensor unit 80 is detached from the display screen 5, the electric power reception block 86 cannot receive the electric power transmission from the electric power transmission block 75, so that the partial screen sensor unit 80 enters into an inactive state. Then, the entire apparatus control block 71 does not receive the pointing input detection information from the partial screen sensor unit 80, so that the corresponding application is terminated.

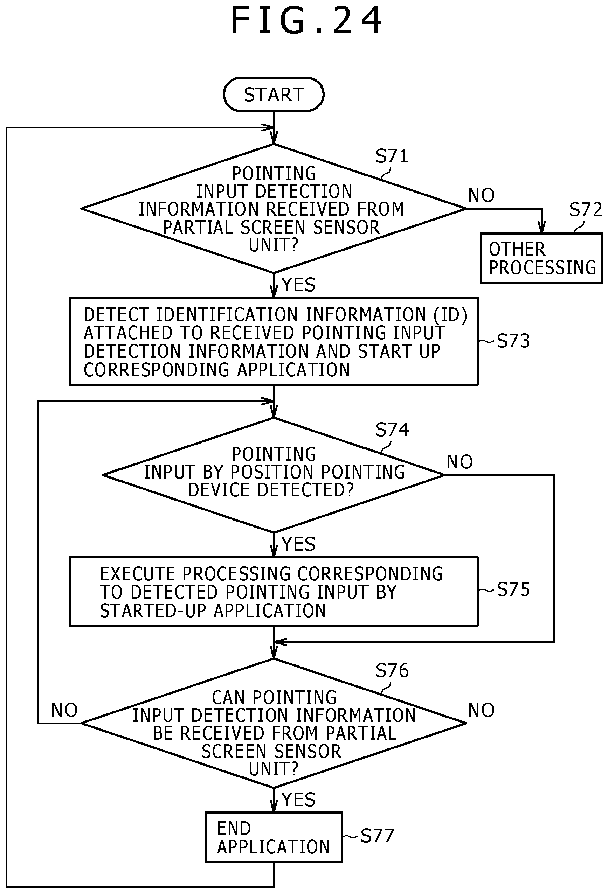

A flow of the processing operations of the entire apparatus control block 71 is described by use of the flowchart shown in FIG. 24. First, the entire apparatus control block 71 determines whether pointing input detection information has been received from the partial screen sensor unit 80 (step S71). If the pointing input detection information has not been received, then the procedure moves to other processing (step S72).

If the pointing input detection information has been received from the partial screen sensor unit 80 in step S71, then the entire apparatus control block 71 detects identification information (ID) attached to the received pointing input detection information to recognize the partial screen sensor unit 80. Next, the entire apparatus control block 71 starts up an application defined as corresponding to the recognized partial screen sensor unit 80 (step S73).

Then, the entire apparatus control block 71 determines from the received pointing input detection information whether a pointing input performed with the position pointing device has been detected or not (step S74). If a pointing input performed with the position pointing device is found to have been detected, then the entire apparatus control block 71 executes the processing corresponding to the detected pointing input by use of the started application (step S75).

Next, the entire apparatus control block 71 determines whether the pointing input information has not been detected from the partial screen sensor unit 80 (step S76). If the pointing input with the position pointing device is found to be not received in step S74, then the procedure goes directly to step S76 by skipping step S75.

If the pointing input information from the partial screen sensor unit 80 has not been received in step S76, then the entire apparatus control block 71 returns the procedure to step S74 to repeat the above-described processing operations therefrom. If the pointing input information from the partial screen sensor unit 80 has not been received in step S76, then the entire apparatus control block 71 terminates the corresponding application (step S77). Subsequently, the entire apparatus control block 71 returns the procedure to step S71 to repeat the above-described processing operations therefrom.

As described above, in the fourth embodiment, a partial screen sensor unit can be attached on the front side of the display screen 5 of an input apparatus, to thereby execute pointing input in a predetermined application.

### Variations of the fourth embodiment

It should be noted that the flowchart shown in FIG. 24 is indicative of an example in which processing is executed with one partial screen sensor unit 80 attached to the display screen 5; however, it is also practicable to attach two or more partial screen sensor units 80 to the display screen 5 at the same time. This is because, as described above, the electric power transmission block 75 can transmit electric power to two or more electric power reception blocks 86 and, at the same time, the entire apparatus control block 71 can recognize, on the basis of the identification information (ID), the pointing input detection information of each particular partial screen sensor unit 80.

It should be noted that, in the fourth embodiment described above in which a partial screen sensor is arranged on the front side of the display screen 5, a position detection sensor based on capacitive coupling is used; however, it is also practicable to arrange a position detection sensor based on electromagnetic induction described with reference to the first embodiment through the third embodiment onto the front surface of the display screen 5. In this case, a partial screen sensor unit is arranged inside the display screen corresponding to an opening section (a portion in which no metal exists) of the upper metal frame 21.

With the input apparatus of the fourth embodiment, the display element unit 20 is used; however, it is also practicable to use a display element unit that does not include a backlight as shown in FIG. 10 or a display element unit 60U having the full screen sensor 61 as shown in FIG. 13.

If the display element unit 60U having the full screen sensor 61 is used, it is desired that the full screen sensor 61 and the sensor block 81 of the partial screen sensor unit 80 be sensors based on different detection schemes. For example, the full screen sensor 61 may be a position detection sensor based on resistive filming, and the sensor block 81 of the partial screen sensor unit 80 may be a position detection sensor based on a capacitive coupling or electromagnetic induction method as described above. However, it should be noted that attaching identification information (ID) to the pointing input detection information supplied from the full screen sensor 61 allows the entire apparatus control block 71 to distinguish different pieces of pointing input detection information from all position detection sensors from each other, so that position detection sensors based on the same detection scheme may be used for the full screen sensor 61 and the sensor block 81. In addition, if the detection areas of the full screen sensor 61 and the sensor block 81 overlap, the pointing input detection information from the sensor block 81 may be processed preferentially.

In the case where both the full screen sensor 61 and the partial screen sensor unit 80 are used at the same time, if positioning of the sensor block 81 of the partial screen sensor unit 80 is performed by use of markers as shown in FIG. 22, then the positioning so performed can be checked by referencing the pointing input detection information of the full screen sensor 61. Specifically, after positioning of the sensor block 81 to the markers of the display screen 5, the user points at the marker points with a position pointing device. Then, the entire apparatus control block 71 determines whether the pointed position is correctly positioned or not, thereby notifying the user of a decision result by means of a message, for example.

In the fourth embodiment, the partial screen sensor unit 80 is detachable from the front surface of the display screen 5; however, it is also practicable to attach the partial screen sensor unit 80 to a predetermined position of the front surface of the display screen 5 in a fixed manner.

It is also practicable to connect the partial screen sensor unit 80 to a signal processing block in the housing 701 of the input apparatus 70 in a wired manner rather than wirelessly as described above.

In the fourth embodiment, an input apparatus also has the function of a personal computer; however, it is also practicable to apply the fourth embodiment even if the input apparatus has no function of a personal computer and operates as an input apparatus of an external device.

### Other variations

In the first embodiment through the fourth embodiment described above, the display elements are liquid crystal display elements; however, it is also practicable to use organic EL panels for the display elements.

It should be understood by those skilled in the art that various modifications, combinations, sub-combinations and alterations may occur depending on design requirements and other factors insofar as they are within the scope of the appended claims. Specifically, the various embodiments described above can be combined to provide further embodiments.

## Claims

1. An input apparatus, comprising:
a display element (23) having a display screen (5) of a predetermined size;
a first sensor (80) configured to have a detection area that is smaller than said display screen (5), and to detect coordinates of a pointing position pointed to in the detection area by a pointing body,
wherein said first sensor (80) is coupled with said display screen (5) such that said detection area, in which a pointing position pointed to by said pointing body is detected, maps to a predetermined display area within said display screen (5);
a second sensor (61) arranged on a front surface side of said display element (23) and configured to detect a pointing position pointed to by the pointing body, wherein the second sensor (61) has a detection area corresponding to the entire area of the display screen (5),
wherein said first sensor (80) includes a circuit (831) being configured to attach identification information for identifying the first sensor (80) to pointing input detection information supplied from the first sensor (80),
wherein identification information for identifying the second sensor (61) is added to pointing input detection information supplied from the second sensor (61),
wherein said first sensor (80) is transparent or translucent,
wherein said first sensor (80) is detachable from the front surface of said display screen (5),
wherein said input apparatus further includes a control block (71) and said control block (71) is configured to display positioning markers (601, 602) on said display screen (5) for indicating a position at which the first sensor (80) is to be attached, wherein said first sensor (80) comprises positioning markers (801, 802) corresponding to said positioning markers (601, 602) of the display screen (5),
wherein, after said first sensor (80) is positioned to said positioning markers (601, 602) of said display screen (5) and a user input pointing at said positioning markers (601, 602) is received, the control block (71) is configured to determine whether the pointed position is correctly positioned or not by referencing the pointing input detection information supplied from the second sensor.

2. The input apparatus according to claim 1,
wherein, to facilitate user entry of a pointing position via the pointing body in the detection area of said first sensor (80), the predetermined display area corresponding to said detection area is displayed on said display screen (5).

3. The input apparatus according to one of the claims 1 to 5, comprising a plurality of said first sensors (80) that are coupled with said display screen (5), wherein identification information for identifying each of said plurality of first sensors (80) is added to said pointing input detection information from each of said plurality of first sensors (80).

4. The input apparatus according to claim 3,
wherein at least one of said plurality of first sensors (80) detects a pointing position pointed to by said pointing body based on an electromagnetic induction method or based on a capacitive coupling method.

5. The input apparatus of any one of claims 1 to 4,
wherein the control block (71) is configured to
receive the pointing input detection information;
recognize, on basis of the identification information, the first sensor (80) that supplied the pointing input detection information;
start up an application defined as corresponding to the recognized first sensor (80); and process the pointing input detection information through the started application.

## Patentansprüche

1. Eingabevorrichtung, umfassend:
ein Anzeigeelement (23) mit einem Anzeigebildschirm (5) einer vorgegebenen Größe;
einen ersten Sensor (80), der dazu eingerichtet ist, einen Erfassungsbereich aufzuweisen, der kleiner als der Anzeigebildschirm (5) ist, und Koordinaten einer Zeigeposition zu erfassen, auf welche in dem Erfassungsbereich durch einen Zeigekörper gezeigt wird,
wobei der erste Sensor (80) mit dem Anzeigebildschirm (5) derart gekoppelt ist, dass der Erfassungsbereich, in welchem eine Zeigeposition, auf welche mit dem Zeigekörper gezeigt wird, erfasst wird, auf einen vorbestimmten Anzeigebereich innerhalb des Anzeigebildschirms (5) abgebildet wird;
einen zweiten Sensor (61), der auf einer Vorderflächenseite des Anzeigeelements (23) angeordnet ist und dazu eingerichtet ist, eine Zeigeposition zu erfassen, auf welche von dem Zeigekörper gezeigt wird, wobei der zweite Sensor (61) einen Erfassungsbereich aufweist, welcher dem gesamten Bereich des Anzeigebildschirms (5) entspricht,
wobei der erste Sensor (80) eine Schaltung (831) aufweist, welche dazu eingerichtet ist, Identifikationsinformationen zum Identifizieren des ersten Sensors (80) an Zeigeeingabeerfassungsinformationen anzuhängen, die von dem ersten Sensor (80) geliefert werden,
wobei Identifikationsinformationen zum Identifizieren des zweiten Sensors (61) zu Zeigeeingabeerfassungsinformationen hinzugefügt werden, die von dem zweiten Sensor (61) geliefert werden,
wobei der erste Sensor (80) transparent oder transluzent ist,
wobei der erste Sensor (80) von der Vorderfläche des Anzeigebildschirms (5) lösbar ist,
wobei die Eingabevorrichtung ferner einen Steuerblock (71) aufweist und der Steuerblock (71) dazu eingerichtet ist, Positionierungsmarkierungen (601, 602) auf dem Anzeigebildschirm (5) anzuzeigen, um eine Position anzuzeigen, an welcher der erste Sensor (80) anzubringen ist, wobei der erste Sensor (80) Positionierungsmarkierungen (801, 802) aufweist, welche den Positionierungsmarkierungen (601, 602) des Anzeigebildschirms (5) entsprechen,
wobei, nachdem der erste Sensor (80) an den Positionierungsmarkierungen (601, 602) des Anzeigebildschirms (5) positioniert worden ist und eine Benutzereingabe, die auf die Positionierungsmarkierungen (601, 602) zeigt, empfangen wird, der Steuerblock (71) dazu eingerichtet ist, zu bestimmen, ob die Position, auf die gezeigt wird, korrekt positioniert ist oder nicht, indem er auf die Positionierungseingabeerfassungsinformationen Bezug nimmt, die von dem zweiten Sensor geliefert werden.

2. Eingabevorrichtung nach Anspruch 1,
wobei, um eine Benutzereingabe einer Zeigeposition über den Zeigekörper in dem Erfassungsbereich des ersten Sensors (80) zu vereinfachen, der vorbestimmte Anzeigebereich, welcher dem Erfassungsbereich entspricht, auf dem Anzeigebildschirm (5) angezeigt wird.

3. Eingabevorrichtung nach einem der Ansprüche 1 bis 5, umfassend mehrere der ersten Sensoren (80), die mit dem Anzeigebildschirm (5) gekoppelt sind, wobei Identifikationsinformationen zum Identifizieren eines jeweiligen der mehreren ersten Sensoren (80) an die Zeigeeingabeerfassungsinformationen des jeweiligen der mehreren ersten Sensoren (80) hinzugefügt werden.

4. Eingabevorrichtung nach Anspruch 3,
wobei mindestens einer der mehreren ersten Sensoren (80) eine Zeigeposition, auf die mit dem Zeigekörper gezeigt wird, basierend auf einem Elektromagnetische-Induktion-Verfahren oder basierend auf einem Kapazitive-Kopplung-Verfahren erfasst.

5. Eingabevorrichtung nach einem der Ansprüche 1 bis 4,
wobei der Steuerblock (71) dazu eingerichtet ist,
die Zeigeeingabeerfassungsinformationen zu empfangen;
auf Basis der Identifikationsinformationen den ersten Sensor (80) zu erkennen, welcher die Zeigeeingabeerfassungsinformationen geliefert hat;
eine Applikation zu starten, die als dem erkannten ersten Sensor (80) entsprechend definiert ist; und
die Zeigeeingabeerfassungsinformationen mittels der gestarteten Applikation zu verarbeiten.

## Revendications

1. Appareil d'entrée, comprenant :
un élément d'affichage (23) ayant un écran d'affichage (5) d'une taille prédéterminée ;
un premier capteur (80) configuré pour avoir une zone de détection qui est plus petite que ledit écran d'affichage (5), et pour détecter les coordonnées d'une position de pointage pointée dans la zone de détection par un corps de pointage,
dans lequel ledit premier capteur (80) est couplé avec ledit écran d'affichage (5) de telle sorte que ladite zone de détection, dans laquelle une position de pointage pointée par ledit corps de pointage est détectée, correspond à une zone d'affichage prédéterminée à l'intérieur dudit écran d'affichage (5) ;
un second capteur (61) agencé sur un côté de surface avant dudit élément d'affichage (23) et configuré pour détecter une position de pointage pointée par le corps de pointage, dans lequel le second capteur (61) a une zone de détection correspondant à la zone entière de l'écran d'affichage (5),
dans lequel ledit premier capteur (80) comporte un circuit (831) configuré pour attacher des informations d'identification pour identifier le premier capteur (80) aux informations de détection d'entrée de pointage fournies à partir du premier capteur (80),
dans lequel des informations d'identification pour identifier le second capteur (61) sont ajoutées aux informations de détection d'entrée de pointage fournies à partir du second capteur (61),
dans lequel ledit premier capteur (80) est transparent ou translucide,
dans lequel ledit premier capteur (80) est détachable de la surface avant dudit écran d'affichage (5),
dans lequel ledit appareil d'entrée comporte en outre un bloc de commande (71) et ledit bloc de commande (71) est configuré pour afficher des marqueurs de positionnement (601, 602) sur ledit écran d'affichage (5) pour indiquer une position à laquelle le premier capteur (80) doit être attaché, dans lequel ledit premier capteur (80) comprend des marqueurs de positionnement (801, 802) correspondant auxdits marqueurs de positionnement (601, 602) de l'écran d'affichage (5),
dans lequel, une fois que ledit premier capteur (80) est positionné sur lesdits marqueurs de positionnement (601, 602) dudit écran d'affichage (5) et qu'un pointage d'entrée utilisateur au niveau desdits marqueurs de positionnement (601, 602) est reçu, le bloc de commande (71) est configuré pour déterminer si la position pointée est positionnée correctement ou non en référençant les informations de détection d'entrée de pointage fournies à partir du second capteur.

2. Appareil d'entrée selon la revendication 1,
dans lequel, pour faciliter une entrée utilisateur d'une position de pointage via le corps de pointage dans la zone de détection dudit premier capteur (80), la zone d'affichage prédéterminée correspondant à ladite zone de détection est affichée sur ledit écran d'affichage (5).

3. Appareil d'entrée selon une des revendications 1 à 5, comprenant une pluralité desdits premiers capteurs (80) qui sont couplés avec ledit écran d'affichage (5), dans lequel des informations d'identification pour identifier chacun de ladite pluralité de premiers capteurs (80) sont ajoutées auxdites informations de détection d'entrée de pointage provenant de chacun de ladite pluralité de premiers capteurs (80).

4. Appareil d'entrée selon la revendication 3,
dans lequel au moins un de ladite pluralité de premiers capteurs (80) détecte une position de pointage pointée par ledit corps de pointage sur la base d'un procédé d'induction électromagnétique ou sur la base d'un procédé de couplage capacitif.

5. Appareil d'entrée selon l'une quelconque des revendications 1 à 4,
dans lequel le bloc de commande (71) est configuré pour recevoir les informations de détection d'entrée de pointage ;
reconnaître, sur la base des informations d'identification, le premier capteur (80) qui a fourni les informations de détection d'entrée de pointage ;
démarrer une application définie comme correspondant au premier capteur (80) reconnu ; et
traiter les informations de détection d'entrée de pointage grâce à l'application démarrée.
